# EUROPÄISCHE PATENTSCHRIFT

(11) **EP 4 285 319 B1**
(45) Veröffentlichungstag und Bekanntmachung des Hinweises auf die Patenterteilung: **06.11.2024**
(21) Anmeldenummer: 22710288.6
(22) Anmeldetag: 26.01.2022
(51) Int. Cl.: G06T 7/00, G06T 11/00, G01S 7/41, G01S 13/88, G01S 13/89

(54) **ERZEUGUNG VON TRAININGSDATEN FÜR ZWEIDIMENSIONALE SCANS EINES BODENRADAR-SYSTEMS**
GENERATING TRAINING DATA FOR TWO-DIMENSIONAL SCANS OF A GROUND PENETRATING RADAR SYSTEM
GENERATION DE DONNEES D'ENTRAINEMENT POUR SCANS BIDIMENSIONNELS D'UN SYSTEME RADAR TERRESTRE

(30) Priorität: 29.01.2021 DE 102021200821
(43) Veröffentlichungstag der Anmeldung: 06.12.2023
(73) Patentinhaber: Fraunhofer-Gesellschaft zur Förderung der angewandten Forschung e.V., 80686 München (DE)
(72) Erfinder: BOLDT, Markus, 76275 Ettlingen (DE); SCHULZ, Karsten, 76275 Ettlingen (DE); THÖNNESSEN, Ulrich, 76275 Ettlingen (DE)
(74) Vertreter: Stöckeler, Ferdinand
(86) Internationale Anmeldenummer: PCT/EP2022/051684
(87) Internationale Veröffentlichungsnummer: WO 2022/161974

(56) Entgegenhaltungen:
- REICHMAN DANIEL ET AL: "Some good practices for applying convolutional neural networks to buried threat detection in Ground Penetrating Radar", 2017 9TH INTERNATIONAL WORKSHOP ON ADVANCED GROUND PENETRATING RADAR (IWAGPR), IEEE, 28 June 2017 (2017-06-28), pages 1 - 5, XP033134105, DOI: 10.1109/IWAGPR.2017.7996100
- BESAW LANCE E ED - HEMMATI HAMID *1954-* [HERAUSGEBERIN] IDENTITY ET AL: "Detecting buried explosive hazards with handheld GPR and deep learning", PROCEEDINGS OF SPIE; [PROCEEDINGS OF SPIE ISSN 0277-786X VOLUME 10524], SPIE, US, vol. 9823, 3 May 2016 (2016-05-03), pages 98230N - 98230N, XP060068181, ISBN: 978-1-5106-1533-5, DOI: 10.1117/12.2223797
- JO HYUNJUN ET AL: "Data augmentation using synthesized images for object detection", 2017 17TH INTERNATIONAL CONFERENCE ON CONTROL, AUTOMATION AND SYSTEMS (ICCAS), INSTITUTE OF CONTROL, ROBOTICS AND SYSTEMS - ICROS, 18 October 2017 (2017-10-18), pages 1035 - 1038, XP033269310, DOI: 10.23919/ICCAS.2017.8204369
- CONNOR SHORTEN ET AL: "A survey on Image Data Augmentation for Deep Learning", JOURNAL OF BIG DATA, vol. 6, no. 1, 6 July 2019 (2019-07-06), XP055738703, DOI: 10.1186/s40537-019-0197-0
- YUE YUNPENG ET AL: "Generation of High-Precision Ground Penetrating Radar Images Using Improved Least Square Generative Adversarial Networks", REMOTE SENSING, vol. 13, no. 22, 15 November 2021 (2021-11-15), CH, pages 4590, XP055874553, ISSN: 2072-4292, DOI: 10.3390/rs13224590

## Beschreibung

### Technisches Gebiet

Ausführungsbeispiele gemäß der Erfindung beziehen sich auf Vorrichtungen und Verfahren zur Erzeugung von Trainingsdaten für zweidimensionale Scans eines Bodenradar-Systems. Ferner befassen sich Ausführungsbeispiele mit Bildverarbeitungstechniken zur Erstellung von Trainingsdaten für zweidimensionale Scans eines Bodenradar-Systems (engl. Ground Penetrating Radar GPR), die zum Trainieren von Machine Learning (ML) - Algorithmen genutzt werden können. Weitere Ausführungsbeispiele beziehen sich auf automatische Bildverarbeitungstechniken zur Erstellung und Erweiterung von Trainingsdaten für Methoden des Maschinellen Lernens für Bodenradarbilder.

### Hintergrund der Erfindung

ML-Verfahren erfreuen sich einer in den letzten Jahren stetig wachsenden Berücksichtigung in verschiedenen Anwendungsbereichen. Speziell die sogenannten Convolutional Neural Networks (CNNs; faltendes neuronales Netzwerk) als Sonderform der Neuronalen Netze (NNs) unterliegen einem hohen Interesse im Themengebiet der digitalen Bildverarbeitung. Damit derartige Netze robuste Analyseergebnisse berechnen können, müssen in der Regel sehr umfangreiche Datensätze zum Training bereitstehen. Verfügbare Netze dienen zur Analyse von Bilddaten, die mit elektrooptischen Sensoren aufgenommen wurden. Für derartige Eingabedaten existiert eine Vielzahl unterschiedlicher Trainingsdatensätze, die zum Beispiel für Klassifikationsaufgaben genutzt werden können. Für GPR-Daten wiederum existieren bis heute, nach aktuellem Wissensstand, keine derartigen Trainingsdaten. Als Lösung weicht man deshalb teils auf Transfer Learning (TL; Transferlernen) Strategien aus, die mit kleineren Datenbasen auskommen. Im Falle einer Neukonstruktion eines Netzes ohne Rückgriff auf TL-Methoden ist man demzufolge darauf angewiesen, durch aufwändige Messkampagnen geeignete Trainingsdaten zu akquirieren.

### Stand der Technik

Zur verarbeitenden Analyse von GPR-Bilddaten existieren nur sehr wenige bis keine frei verfügbaren Datensätze, die zum Training von CNNs genutzt werden können. Daraus folgt, dass häufig Methoden wie das TL zum Einsatz kommen, um bereits vortrainierte Netze auf den jeweiligen GPR-Datensatz anzupassen. Hierfür ist eine relativ geringe Anzahl an GPR-Daten erforderlich. Essentielle Probleme dabei sind, dass die dem vortrainierten Netz zugrundeliegenden Daten bezüglich Dimension, Grauwertspektrum und Objektsignatur der GPR-Daten nicht übereinstimmen und entsprechend angepasst werden müssen, was wiederum häufig mit schlechteren Klassifikationsergebnissen verbunden ist.

Der alternative Weg, die Erstellung und das Testen GPR-spezifischer Netzstrukturen von Grund auf, ist wiederum ohne Trainingsdaten in umfangreicher Anzahl nur bei gleichzeitigen Qualitätseinbußen bei der Klassifikation umsetzbar.

Aus dem Stand der Technik sind ferner folgende Ansätze bekannt.

D. Reichman, L. M. Collins and J. M. Malof, befassen sich in "Some good practices for applying convolutional neural networks to buried threat detection in Ground Penetrating Radar," (2017 9th International Workshop on Advanced Ground Penetrating Radar (IWAGPR), 2017, pp. 1-5, doi: 10.1109/IWAGPR.2017.7996100) mit der Anwendung von Convolutional Neural Networks auf GPR-Daten. Insbesondere befassen sich die Autoren mit einem Initialisierungsschritt eines Vortrainings und einem Datensatzerweiterungsprotokoll.

Besaw, Lance E. befassen sich in "Detecting buried explosive hazards with handheld GPR and deep learning." (Detection and Sensing of Mines, Explosive Objects, and Obscured Targets XXI. Vol. 9823. SPIE, 2016) mit Techniken zur Datenaugmenation für GPR-Trainingsdaten.

H. Jo, Y. -H. Na and J. -B. Song, befassen sich in "Data augmentation using synthesized images for object detection," (2017 17th International Conference on Control, Automation and Systems (ICCAS), 2017, pp. 1035-1038, doi: 10.23919/ICCAS.2017.8204369) mit Methoden zum Generieren eines Datensatzes durch Synthetisieren der Bilder von Hintergrund und Objekt. Verschiedene Bilder können durch Nachbearbeitung erzeugt werden, wie z. B. Hinzufügen von Rauschen und Ändern der Helligkeit zu den Bildern von Objekten, die aus verschiedenen Blickwinkeln erhalten wurden.

Zum besseren Verständnis des Hintergrunds der Erfindung wird ferner auf die, in den obig erwähnten Dokumenten, zitierten Dokumente verwiesen.

Im Anbetracht dessen besteht ein Bedarf nach einem Konzept, welches es ermöglicht, auf Grundlage einer geringen Anzahl Scans (bspw. GPR Bildern) eines Bodenradar-Systems bzw. auf Grundlage einer geringen Anzahl GPR Bilder eine große Menge Trainingsdaten zu erstellen, sodass die Trainingsdaten beispielsweise zum Trainieren von Machine Learning-Algorithmen genutzt werden können. Ferner besteht ein Bedarf nach einer alternativen Vorgehensweise, um den, mit der Akquisition von geeigneten Trainingsdaten, bspw. zur Neukonstruktion eines Neuronalen Netzes, verbundenen Aufwand zu verringern.

Die Aufgabe der vorliegenden Erfindung besteht deshalb darin, eine Vorrichtung und ein Verfahren sowie ein Computerprogrammprodukt bereitzustellen, die es ermöglichen, eine große Menge Trainingsdaten auf Grundlage einer geringen Anzahl von Scans eines Bodenradar-Systems bereitzustellen und/oder um Trainingsdaten mit geringem Aufwand bereitzustellen.

Diese Aufgabe wird durch die unabhängigen Patentansprüche gelöst. Erfindungsgemäße Weiterbildungen sind in den Unteransprüchen definiert.

### Zusammenfassung der Erfindung

Ausführungsbeispiele gemäß der vorliegenden Erfindung schaffen ein Vorrichtung zur Erzeugung von Trainingsdaten für zweidimensionale Scans eines Bodenradar-Systems, wobei die Vorrichtung einen Störobjektextraktor aufweist, der ausgebildet ist, um aus einem Quell-GPR Bild ein Quotientenbild mit einem Referenzbild zu bestimmen und zumindest ein Störobjekt, basierend auf dem Quotientenbild, zu extrahieren. Ferner weist die Vorrichtung einen Ergebnisbilderzeuger auf, der ausgebildet ist, um für das Quell-GPR Bild zumindest ein Ergebnis-GPR Bild, basierend auf dem zumindest einen extrahierten Störobjekt zu erzeugen, um die Trainingsdaten zu erzeugen.

Weitere Ausführungsbeispiele gemäß der vorliegenden Erfindung schaffen ein Verfahren zur Erzeugung von Trainingsdaten für zweidimensionale Scans eines Bodenradar-Systems, wobei das Verfahren ein Bestimmen eines Quotientenbildes aus einem Quell-GRP Bild mit einem Referenzbild, ein Extrahieren zumindest eines Störobjekts aus dem Quell-GPR Bild, basierend auf dem Quotientenbild, und ein Erzeugen zumindest eines Ergebnis-GPR Bildes für das Quell-GPR Bild, abhängig von dem zumindest einen extrahierten Störobjekt, zur Erzeugung der Trainingsdaten, aufweist.

Weitere Ausführungsbeispiele gemäß der vorliegenden Erfindung schaffen ein Computerprogramm mit einem Programmcode zur Durchführung des erfindungsgemäßen Verfahrens gemäß Ausführungsbeispielen der vorliegenden Offenbarung.

Ausführungsbeispiele gemäß der vorliegenden Erfindung beruhen auf dem Kerngedanken, dass eine z.B. große Menge von Trainingsdaten auf Grundlage einer beispielsweise geringen oder begrenzten Anzahl von Quell-GPR Bildern erzeugt werden kann, indem eine Extraktion von Störobjekten der Quell-GPR Bilder unter Verwendung von Quotientenbildern erfolgt und eine anschließende Manipulation oder Veränderung von GPR Bildern vorgesehen ist, um unter Verwendung der extrahierten Störobjekte, zumindest ein Ergebnis-GPR-Bild zu erzeugen. Hieraus kann unter einfacher Berechnung eines Quotientenbildes eine aufwandsarme Grundlage für eine möglicherweise mehrfache Verwendung des Störobjekts in Ergebnis-GPR-Bildern geschaffen werden, so dass Trainingsdaten aufwandsarm und in skalierbarem Umfang erstellt werden können.

Zur Extraktion von Störobjekten weist eine erfindungsgemäße Vorrichtung einen Störobjektextraktor auf, welcher aus einem Quell-GPR Bild zusammen mit einem Referenzbild ein Quotientenbild bestimmen kann. Bei dem Referenzbild kann es sich dabei beispielsweise bevorzugt um ein GPR Bild handeln, welches kein Störobjekt aufweist. Bei dem Referenzbild kann es sich beispielsweise um einen Mittelwert Bild einer Vielzahl von störungsfreien GPR Bildern handeln. Dabei sei darauf hingewiesen, dass die Störungsfreiheit oder das Fehlen eines Störobjektes sich auf Störungen oder Artefakte oder Elemente bezieht, die beispielsweise im Zuge eines Trainings mittels erfindungsgemäß erzeugten Trainingsdaten erkannt oder beispielsweise klassifiziert werden sollen. Störungsfrei muss dabei keineswegs das Fehlen von Einflüssen wie beispielsweise Rauschen bedeuten. Bei einem Störobjekt kann es sich beispielsweise um ein zu detektierendes Objekt unterhalb einer Bodenoberfläche, die unter Erzeugung der Quell-GPR Bilder abgetastet wurde, handeln. Durch die Quotientenbildbbestimmung kann der Störobjektextraktor in einfachen Worten ausgedrückt durch den Vergleich des Quell-GPR Bildes mit dem Referenzbild ein Störobjekt erkennen und extrahieren.

Um aus der beispielsweise geringen Menge von Quell-GPR Bildern und zugehörigen Störobjekten eine zum Beispiel große Menge von Trainingsdaten zu erzeugen weist die erfindungsgemäße Vorrichtung einen Ergebnisbilderzeuger auf, durch den beispielsweise die extrahierten Störobjekte manipuliert und/oder verändert werden können, um eine z.B. große Menge von Ergebnis-GPR Bildern zu erzeugen. Dabei kann ein Störobjekt beispielsweise in ein GPR Bild eingesetzt werden, welches zuvor kein Störobjekt, oder ein oder mehrere andere Störobjekte aufgewiesen hat. Ferner können die extrahierten Störobjekte auch abgewandelt werden und ebenso in andere oder in ihr Ursprungs-Quell-GPR Bild oder in das Referenzbild eingesetzt werden. Erfindungsgemäß kann eine Vielzahl von Variationen der Manipulationen und/oder Änderungen und/oder Abwandlungen, zur Erzeugung der Ergebnis-GPR Bilder, angewendet werden.

Die Ergebnis-GPR Bilder können dementsprechend zur Erzeugung der Trainingsdaten verwendet werden, beispielsweise indem sie die Trainingsdaten selbst bilden. Durch eine Veränderung der Quell-GPR Bilder im Hinblick auf die Störobjekte kann so eine Datengrundlage geschaffen werden, auf Basis derer Algorithmen trainiert werden können wie beispielsweise Machine Learning Algorithmen. Durch die Vielzahl von möglichen Variationen im Hinblick auf das Störobjekt kann so ein robuster Lernvorgang, und/oder ein Lernvorgang, der zu einem robusten (bspw. Klassifikations-)Algorithmus führt, ermöglicht werden.

Dabei sei allerdings darauf hingewiesen, dass die erfindungsgemäße Vorrichtung bei Vorliegen eines ungestörten GPR Bildes dies problemlos in dem Verfahren verwendet werden kann, da aus einem solchen Bild in Ermangelung eines Störobjekts bspw. keine Störobjektextraktion durchführt wird. Ein solches ungestörtes Bild kann dann wiederum aber als Grundlage für ein Ergebnisbild herangezogen werden bspw. indem ein, aus einem anderen Bild extrahiertes, Störobjekt in dieses integriert wird.

Bei weiteren Ausführungsbeispielen gemäß der vorliegenden Erfindung ist der Ergebnisbilderzeuger ausgebildet, um zur Erzeugung des zumindest einen Ergebnis-GPR Bildes, das zumindest eine Störobjekt in ein zweites GPR Bild einzufügen.

Bei dem zweiten GPR Bild kann es sich beispielsweise um ein weiteres Quell-GPR Bild handeln, welches beispielsweise im zuvor keine Störung aufgewiesen hat. Ferner kann es sich bei dem zweiten GPR Bild auch um ein ebenfalls gestörtes GPR Bild handeln, aus welchem das Störobjekt extrahiert wurde. So können beispielsweise einfach ausgedrückt Störobjekte von GPR Bildern untereinander ausgetauscht werden, was zu einer schnellen Vergrößerung der Menge von Trainingsdaten führen kann.

Bei weiteren Ausführungsbeispielen gemäß der vorliegenden Erfindung ist das zweite GPR Bild das Referenzbild. Das Referenzbild ist beispielsweise bevorzugt ein ungestörtes GPR Bild, welches zum Beispiel aus einer Mittelung oder Überlagerung einer Vielzahl von ungestörten Quell-GPR Bildern gebildet sein kann. Somit kann es eine Art generisches ungestörtes Bild bilden. Durch das Einfügen von Störobjekten in ein derartiges Bild kann beispielsweise im Hinblick auf einen Lernalgorithmus eine gute Datengrundlage zur Erkennung der Störobjekt geschaffen werden, z.B. auf Grund des gemittelten und damit bspw. repräsentativen oder charakteristischen Hintergrunds des Bildes, wobei der Hintergrund den ungestörten Bildbereich, also den Bereich ohne Störobjekt bezeichnen kann.

Bei weiteren Ausführungsbeispielen gemäß der vorliegenden Erfindung ist der Ergebnisbilderzeuger ausgebildet, um das zumindest eine Störobjekt und/oder eine Position des zumindest einen Störobjekts in dem zweiten GPR Bild, im Vergleich zu dem Quell-GPR Bild zu verändern, um das zumindest eine Ergebnis-GPR Bild zu erzeugen.

Durch eine Veränderung des zumindest einen Störobjekts und/oder der Position des zumindest einen Störobjekts kann beispielsweise allein durch die Extraktion eines einzigen Störobjekt es aus einem Quell-GPR Bild eine nahezu beliebig große Menge von Ergebnis-GPR Bildern erzeugt werden, auf Grund der nahezu unerschöpflichen Möglichkeiten beispielsweise die Position eines Störobjekt in einem Bild zu verändern, oder im Hinblick auf eine Vielzahl von extrahierten Störobjekten und Quell-GPR Bildern eine beispielsweise zusätzlich ausführbare Permutation von Störobjekten und Quell-GPR Bild-Kombinationen. Dementsprechend kann aus einer beispielsweise geringen Grundmenge von Quell-GPR Bildern, welche Störobjekte aufweisen, eine zum Beispiel sehr große Menge von Trainingsdaten erzeugt werden.

Bei weiteren Ausführungsbeispielen gemäß der vorliegenden Erfindung ist der Ergebnisbilderzeuger ausgebildet, um eine Skalierung des zumindest einen Störobjekts in dem zweiten GPR Bild, im Vergleich zu dem Quell-GPR Bild zu verändern, um das zumindest eine Ergebnis-GPR Bild zu erzeugen.

Neben einer Vergrößerung des Trainingsdatenbestandes kann durch eine Skalierung des Störobjekts auch die Qualität der Trainingsdaten verbessert werden, da eine Vielzahl von abgewandelten Störobjekten zur Erzeugung der Ergebnis-GPR Bilder herangezogen werden kann. Durch das Training auf Grundlage von Daten mit skalierten Störobjekten kann so ein besonders robuster Algorithmus trainiert werden.

Bei weiteren Ausführungsbeispielen gemäß der vorliegenden Erfindung ist der Ergebnisbilderzeuger ausgebildet, um eine Grauwertintensität des zumindest einen Störobjekts in dem zweiten GPR Bild, im Vergleich zu dem Quell-GPR Bild zu verändern, um das zumindest eine Ergebnis-GPR Bild zu erzeugen.

Dadurch können die Trainingsdaten weiter verbessert werden, beispielsweise im Hinblick auf das Trainieren von robusten Klassifikatoren, zum Beispiel aus dem Bereich des Machine Learning. Insbesondere können durch eine Veränderung der Grauwerte veränderte Aufnahmebedingungen und /oder Aufnahme-Hardware, beispielsweise zur Abtastung einer Bodenoberfläche und zur Erzeugung der Quell-GPR Bilder, in den Trainingsdaten berücksichtigt werden.

Bei weiteren Ausführungsbeispielen gemäß der vorliegenden Erfindung handelt es sich bei dem Quell-GPR Bild um ein zweidimensionales GPR Bild. Durch die Verwendung von zweidimensionalen GPR Bildern können zweidimensionale Störobjekte extrahiert werden und dementsprechend auch zweidimensionale Ergebnis-GPR Bilder erzeugt werden.

Bei weiteren Ausführungsbeispielen gemäß der vorliegenden Erfindung ist das Quell-GPR Bild ein GPR Bild einer Mehrzahl von ersten GPR Bildern. Hierdurch können Störobjekte kombiniert werden und/oder durch die Kombination der ersten GPR Bilder eine Filterung einzelner Bildeigenschaften genutzt werden.

Bei weiteren Ausführungsbeispielen gemäß der vorliegenden Erfindung handelt es sich bei der Mehrzahl der ersten GPR Bilder um eine Mehrzahl von zeitlich aufeinanderfolgenden GPR Bildern, die aus einer Sequenz von einer Mehrzahl von aufgenommenen GPR Bildern erzeugt wurden.

Bei weiteren Ausführungsbeispielen gemäß der vorliegenden Erfindung weist die Vorrichtung ein GPR System zur Datenaufnahme auf, um die Sequenz der Mehrzahl der aufgenommenen GPR Bilder aufzunehmen.

Durch eine Integration eines GPR Systems zur Datenaufnahme kann ein Gesamtsystem geschaffen werden, welches im Feld, also beispielsweise in einem Bereich einer Bodenoberfläche, welche abgetastet werden soll, eingesetzt werden kann. Dadurch kann beispielsweise direkt vor Ort eine Datengrundlage in Form von Trainingsdaten geschaffen werden, mit derer ein Algorithmus trainiert werden kann.

Bei weiteren Ausführungsbeispielen gemäß der vorliegenden Erfindung handelt es sich bei dem GPR System zur Datenaufnahme um ein mehrkanaliges Bodenradar und die Vorrichtung ist ausgebildet, um das mehrkanalige Bodenradar einzusetzen, um die Sequenz der Mehrzahl der aufgenommenen GPR Bilder aufzunehmen. Durch die Verwendung eines mehrkanaligen Bodenradars kann eine abzutastende Bodenoberfläche beispielsweise schneller abgetastet werden, durch die Mehrzahl von Kanälen, die parallel Informationen generieren können.

Bei weiteren Ausführungsbeispielen gemäß der vorliegenden Erfindung handelt es sich bei dem GPR System um ein einkanaliges System, das parallel zueinander angeordnete Messbahnen aufweist. Dabei ist die Vorrichtung ausgebildet, um das einkanalige System einzusetzen, um die Sequenz der Mehrzahl der aufgenommenen GPR Bilder aufzunehmen. Um beispielsweise eine kostengünstigere Ausführung des GPR Systems bereitzustellen kann das GPR System als einkanaliges System ausgebildet sein. Die parallele Anordnung der Messbahnen kann dabei eine flächenhafte Abtastung ermöglichen.

Bei weiteren Ausführungsbeispielen gemäß der vorliegenden Erfindung ist die Vorrichtung ausgebildet, um einen über in der Sequenz der Mehrzahl der aufgenommenen GPR Bilder variierenden Abstand zwischen Sensor und Bodenoberfläche auszugleichen, um die Mehrzahl der ersten GPR Bilder zu erzeugen. Durch Unebenheiten in der Bodenoberfläche, welche zu einem variierenden Abstand zwischen dem Sensor, welcher zur Aufnahme der GPR Bilder verwendet wird, und Bodenoberfläche führen kann, kann eine darauffolgende Verarbeitung der aufgenommenen GPR Bilder erschwert werden. Daher kann es vorteilhaft sein, einen solchen variierenden Abstand auszugleichen, wobei der Ausgleich als eine Art Normierung bezüglich einem Abstand zur Bodenoberfläche aufgefasst werden kann. Eine entsprechende Abstandsinformation kann beispielsweise aus einer Auswertung eines aufgenommenen GPR Bildes erfolgen. So kann beispielsweise die Bodenoberfläche, bzw. die Lage der Bodensignatur, als charakteristisches Merkmal in einem GPR Bild detektiert werden, sodass eine entsprechende Anpassung des Bildes vorgenommen werden kann.

Bei weiteren Ausführungsbeispielen gemäß der vorliegenden Erfindung ist die Vorrichtung ausgebildet, um eine in der Sequenz der Mehrzahl der aufgenommenen GPR Bilder variierende Bodensignatur zu normieren, um eine normierte Bodensignatur zu erhalten, und um die Mehrzahl der ersten GPR Bilder unter Verwendung der normierten Bodensignatur zu erzeugen. Bei der Bodensignatur kann es sich beispielsweise um bodeninhärenten Abstrahleigenschaften, zum Beispiel von Bodenschichten, handeln. So kann es beispielsweise je nach vorhandener Bodenbeschaffenheit zu unterschiedlichen, zurückkehrenden Radarsignalen kommen. Dieser Einfluss kann eine Detektion von Störobjekten, zum Beispiel für eine darauffolgende Extraktion, erschweren. Und diesen Einfluss zu verringern, kann daher eine normierten Bodensignatur bestimmt werden mit derer die Mehrzahl der ersten GPR Bilder erzeugt wird. Dadurch kann eine Fehleranfälligkeit einer darauffolgenden Störobjektextraktion verringert werden oder anders ausgedrückt diese robuster gemacht werden.

Bei weiteren Ausführungsbeispielen gemäß der vorliegenden Erfindung weist die Vorrichtung einen Zero-Offset Korrektor auf, der ausgebildet ist, um eine Zero-Offset-Korrektur bezüglich der Sequenz der Mehrzahl der aufgenommenen GPR Bilder vorzunehmen, um die Mehrzahl der ersten GPR Bilder zu erzeugen.

Durch die Integration eines Zero-Offset Korrektors in die Vorrichtung kann ein System geschaffen werden, welches beispielsweise besonders vorteilhaft für mobile Anwendungen, zur Erzeugung von Trainingsdaten eingesetzt werden kann. So kann beispielsweise im Feld direkt eine Korrektur der aufgenommenen GPR Bilder erfolgen, sodass beispielsweise auch Speicherplatz eingespart werden kann, indem nur aufbereitete GPR Bilder gespeichert und Rohdaten direkt nach der Verarbeitung gelöscht werden können. Die Zero-Offset-Korrektur des Zero-Offset Korrektors kann dabei bspw. den zuvor erläuterten Ausgleich eines variierenden Abstand zwischen Sensor und Bodenoberfläche und/oder die Normierung über eine variierende Bodensignatur aufweisen.

Bei weiteren Ausführungsbeispielen gemäß der vorliegenden Erfindung ist das Referenzbild ein Mittelwertbild aus einer Vielzahl von störungsfreien GPR Bildern der Sequenz der Mehrzahl der aufgenommenen GPR Bilder. Durch die Erzeugung des Referenzbildes aus einer Mittelwertbildung einer Vielzahl von störungsfreien GPR Bildern der Sequenz kann eine, an die jeweilige Sequenz angepasste, Referenz erzeugt werden. Durch die Verwendung der GPR Bilder der Sequenz können direkt Merkmale der Bodenbeschaffenheit oder Eigenschaften der Bodenbeschaffenheit, welche einen Einfluss auf die GPR Bilder haben, mitberücksichtigt werden. Ein derartige Erzeugung eines Referenzbildes kann beispielsweise als adaptive Referenzerzeugung interpretiert werden, zum Beispiel adaptiv im Hinblick auf veränderliche Umgebungsinformationen in den GPR Bildern, welche beispielsweise mit Bodeneigenschaften assoziiert sind.

Bei weiteren Ausführungsbeispielen gemäß der vorliegenden Erfindung weist der Störobjektextraktor einen Quotientenbildbestimmer, zur Bestimmung des Quotientenbildes, auf und der Störobjektextraktor ist ausgebildet, um zur Extraktion des Störobjekts eine Änderungsdetektion, basierend auf einer Filterung und/oder einem Schwellwertvergleich, durchzuführen. Da das Quotientenbild Unterschiede zwischen dem entsprechenden Quell-GPR Bild und dem Referenzbild beinhaltet, ist es vorteilhaft entsprechende Unterschiede im Hinblick auf das Vorhandensein eines Störobjektes zu analysieren und/oder ungewollte Einflüsse, welche zu Unterschieden im Quotientenbild führen können, aber unabhängig von dem Störobjekt sind, abzuschwächen. Um nicht fälschlicherweise Unterschiede, welche beispielsweise durch Bildrauschen hervorgerufen sind, als Störobjekte zu extrahieren kann erfindungsgemäß eine Filterung und/oder ein Schwellwertvergleich durch den Störobjektextraktor durchgeführt werden. Somit können Störobjekte mit verringerter Fehleranfälligkeit erkannt und extrahiert werden.

Bei weiteren Ausführungsbeispielen gemäß der vorliegenden Erfindung weist der Störobjektextraktor ein Filter auf und das Filter ist ausgebildet, um das Quotientenbild, zur Unterdrückung von Rauschpixel, zu filtern. Dadurch kann, wie zuvor beschrieben, die Fehleranfälligkeit der Störobjektextraktion verringert werden.

Bei weiteren Ausführungsbeispielen gemäß der vorliegenden Erfindung ist das Filter ein strukturerhaltendes, morphologisches Filter und das Filter ist ausgebildet, um Zusammenhangskomponenten des Quotientenbildes in Abhängigkeit ihrer Größe zu löschen oder zu erhalten. Durch die Auswahl von Zusammenhangskomponenten des Quotientenbildes in Abhängigkeit ihrer Größe kann beispielsweise auf Grundlage einer zu erwartenden Größe von Störobjekten eine Anpassung des Quotientenbildes durchgeführt werden. Dementsprechend können beispielsweise nur noch solche Elemente in dem Quotientenbild zur Extraktion berücksichtigt werden, welche eine gewisse Mindestgröße erfüllen. Somit kann wiederum die Fehleranfälligkeit der Störobjektextraktion verringert werden.

Ganz allgemein können Ausführungsbeispiele gemäß der vorliegenden Erfindung strukturerhaltende Filter aufweisen. Als eine strukturerhaltende Eigenschaft kann verstanden werden, dass ein derartiges morphologisches, alternierendes sequentielles Filter (ASF) im Vergleich bspw. zu verschiedenen Box-Filtern (Mittelwert, etc.) keine oder lediglich eine vernachlässigbare Verfälschung des Bildinhalts zur Folge hat. "Verfälschung" kann dabei bspw. die Hinzufügung filterspezifischer Artefakte (z.B. "Verschmierung" bei Mittelwertfiltern) umfassen bzw. im Sinne einer Hinzufügung solcher filterspezifischer Artefakte verstehen zu sein.

Ein ASF kann z.B. in seiner konventionellen Ausprägung bspw. bei [Soille, 1998] als besonders geeignet zur Verarbeitung eng aneinander liegender Strukturen unterschiedlicher Helligkeit und Größe beschrieben sein bzw. dazu ausgebildet sein. Die Erfinder haben erkannt, dass ein derartiges Filter ebenso für Radarbilder gut zur Rauschminderung geeignet sein kann.

Bei weiteren Ausführungsbeispielen gemäß der vorliegenden Erfindung weist der Störobjektextraktor einen Schwellwertkomparator auf, der ausgebildet ist, um das Quotientenbild einem Schwellwertvergleich zu unterziehen, um eine binäre Änderungskarte zu bestimmen.

Bei Quotientenbildern, welche aus jeweils zwei Bildern, also bspw. Quell GRP Bild und Referenzbild, mit großen Abweichungen zueinander erzeugt wurden und wobei zumindest ein Teil der Abweichungen nicht aufgrund eines, in einem der Bilder vorhandenen, Störobjekts verursacht sind, kann der Schwellwertkomparator dazu beitragen, diesen Teil der Abweichungen, welche nicht von einem Störobjekts verursacht sind (sondern bspw. von einem veränderten Hintergrund, z.B. eine veränderte Bodenschicht) nicht fälschlicherweise als Störobjekt zu erkennen.

Bei Quotientenbildern, welche aus jeweils zwei Bildern, also bspw. Quell GRP Bild und Referenzbild, mit kleinen oder nur sehr geringen Abweichungen zueinander erzeugt wurden und wobei zumindest ein Teil der Abweichungen nicht aufgrund eines, in einem der Bilder vorhandenen, Störobjekts verursacht sind, kann die Schwellwert-Methode unter Umständen selbst bspw. nicht verhindern, dass keine Störobjekte detektiert werden. Das kann dann im Grunde ein "Verdienst" der beiden Bilder bzw. deren Inhalte und Beschaffenheiten oder anders ausgedrückt verursacht durch die Inhalte und Beschaffenheiten der beiden Bilder sein. Beispielsweise kann in anderen Worten, das Problem der Falscherkennung bei kleinen oder nur sehr geringen Abweichungen erfindungsgemäß nicht auftreten und muss dementsprechend nicht zwingend mit dem Schwellwertkomparator adressiert werden.

Zum Beispiel kann aus Erfahrungswerten eine Mindestschwelle, beispielsweise für die Grauwerte, festgelegt werden, welche in einem Quotientenbild für ein zu erwartendes Störobjekt erfüllt sein kann. Gemäß Ausführungsbeispielen kann jedoch bevorzugt anstelle einer Festlegung der Mindestschwelle aus Erfahrungswerten das erfindungsgemäße automatisierte Verfahren Verwendung finden, da die Grauwerte bzw. Helligkeiten der Störobjekte stark untereinander variieren können. Daher kann es beispielsweise sogar vorteilhaft sein eine manuelle Festlegung zu vermeiden. Somit kann die Robustheit der Störobjektextraktion weiter verbessert werden. Ferner kann durch die Binarisierung zur Erzeugung der binäre Änderungskarte eine beispielsweise starke Kompression des notwendigen Speicherplatzes und dementsprechend auch die notwendige Rechenkapazität zur Weiterverarbeitung der binären Änderungskarte reduziert werden, da ein Großteil der Quellinformation, zum Beispiel zur Extraktion des Störobjektes, verworfen werden kann, da beispielsweise die Position des Störobjektes mit binärwertigen Datenpunkten in der Änderungskarte angezeigt werden kann. Die Binarisierung, bspw. der Grauwerte, kann z.B. anhand des Schwellwertvergleichs erfolgen, zum Beispiel in Abhängigkeit davon ober der Schwellwert zumindest erfüllt, oder unterschritten wird.

Bei weiteren Ausführungsbeispielen gemäß der vorliegenden Erfindung weist der Störobjektextraktor einen Pixelreduzierer auf, der ausgebildet ist, um eine Reduzierung von Änderungspixeln der binären Änderungskarte durchzuführen, wobei binäre Zusammenhangskomponenten der binären Änderungskarte kleiner einer Anzahl von Pixeln gelöscht werden, die mit einer Mindestgröße des Störobjekts assoziiert sind. Somit kann eine Extraktion von Störobjekten, welche beispielsweise uninteressant für eine entsprechende Klassifikationsaufgabe sind (bspw. für eine Klassifikation von großen Rohrleitungen unter der Erde, wobei aber auch Nägel oder Schrauben als Störobjekte erkennbar sind), und/oder eine Extraktion von falsch erkannten Störobjekten, beispielsweise aufgrund von Aufnahmestörungen in den GPR Bildern, verhindert oder zumindest unwahrscheinlicher gemacht werden.

Bei weiteren Ausführungsbeispielen gemäß der vorliegenden Erfindung ist der Störobjektextraktor ausgebildet, um basierend auf der binären Änderungskarte das zumindest eine Störobjekt aus dem Quell-GPR Bild zu extrahieren. Durch die Verwendung der binären Änderungskarte kann sich, durch die verringerte Anzahl an Pixeln und deren binärwertige Information, der notwendige Speicherplatz und die erforderliche Rechenleistung zur Handhabung der Bildinformationen verringern. Ferner kann die Robustheit der Störobjektextraktion, aufgrund der zuvor erklärten Eigenschaften der binären Änderungskarte, verbessert werden.

Bei weiteren Ausführungsbeispielen gemäß der vorliegenden Erfindung ist der Ergebnisbilderzeuger ausgebildet, um zur Erzeugung des zumindest einen Ergebnis-GPR Bildes, das zumindest eine extrahierte Störobjekt in das zweite GPR Bild, durch eine Mittelwertbildung zwischen dem Quell-GPR Bild und dem zweiten GPR-Bild, für jedes Pixel der binären Änderungskarte, einzufügen. Die Mittelwertbildung bildet eine einfache und wenig rechenaufwändige Möglichkeit, das Ergebnis-GPR Bild aus dem zweiten GPR Bild und dem extrahierten Störobjekt zu bilden. Durch die Mittelwertbildung, für jedes Pixel der binären Änderungskarte, kann dabei sogar weiter Rechenaufwand eingespart werden, da nur für die betreffenden Pixel ein Mittelwert berechnet werden muss. Ferner ermöglicht die Mittelwertbildung die Vermeidung eines unnatürlichen Übergangs zwischen eingefügtem Störobjekt und zweiten GPR Bild, was beispielsweise für das Trainieren eines Algorithmus, zum Beispiel im Hinblick auf die Nachbildung real aufgenommener GPR Bilder mit Störobjekten, Vorteile aufweisen kann. Beispielsweise kann durch die Mittelwertbildung ein Effekt, dass, in einer Umgebung um ein Störobjekt herum, an der Grenzfläche zwischen Boden und Störobjekt, veränderte Reflexionseigenschaften des Bodens vorherrschen, z.B. da der Boden um das Störobjekt herum dichter oder lockerer ist, ab- bzw. nachgebildet werden.

### Figurenkurzbeschreibung

Ausführungsbeispiele gemäß der vorliegenden Erfindung werden nachfolgend Bezug nehmend auf die beiliegenden Figuren näher erläutert. Hinsichtlich der dargestellten schematischen Figuren wird darauf hingewiesen, dass die dargestellten Funktionsblöcke sowohl als Elemente oder Merkmale der erfindungsgemäßen Vorrichtung als auch als entsprechende Verfahrensschritte des erfindungsgemäßen Verfahrens zu verstehen sind, und auch entsprechende Verfahrensschritte des erfindungsgemäßen Verfahrens davon abgeleitet werden können. Es zeigen:
- Fig. 1: ein schematisches Blockschaltbild einer Vorrichtung gemäß einem Ausführungsbeispiel der vorliegenden Erfindung;
- Fig. 2: ein schematisches Blockschaltbild einer Vorrichtung mit zusätzlichen optionalen Elementen gemäß einem Ausführungsbeispiel der vorliegenden Erfindung;
- Fig. 3: ein schematisches Ablaufdiagramm eines Verfahrens gemäß einem Ausführungsbeispiel gemäß der vorliegenden Erfindung;
- Fig. 4: Beispiele von (Zwischen-)Ergebnisbildern die in Schritten des in Fig. 3 erläuterten Verfahrens erhalten werden können, zur Erläuterung von Ausführungsbeispielen;
- Fig. 5: Beispielhafte (Zwischen-)Ergebnisbilder der Data Augmentation für eines der in Fig. 4 dargestellten Bilder gemäß einem Ausführungsbeispiel;
- Fig. 6: ein Ablaufdiagramm eines Verfahrens gemäß einem Ausführungsbeispiel der vorliegenden Erfindung; und
- Fig. 7: ein Beispiel einer 8er Nachbarschaft eines Pixels zur Verwendung in Ausführungsbeispielen der vorliegenden Erfindung; und
- Fig. 8: ein Beispiel einer 4er Nachbarschaft eines Pixels zur Verwendung in Ausführungsbeispielen der vorliegenden Erfindung.

### Detaillierte Beschreibung der Ausführungsbeispiele gemäß den Figuren

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen oder ähnlichen Bezugszeichen versehen sind, so dass die in unterschiedlichen Ausführungsbeispielen dargestellte Beschreibung dieser Elemente untereinander austauschbar ist bzw. aufeinander angewendet werden kann.

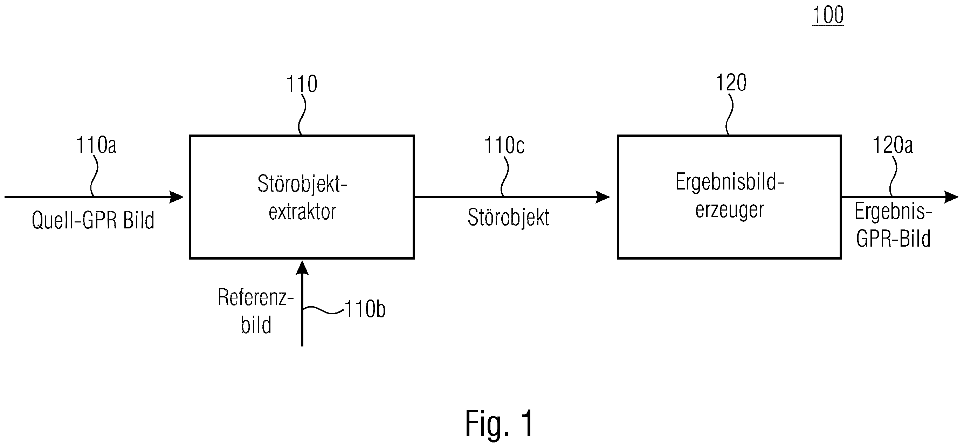

Fig. 1 zeigt ein schematisches Blockschaltbild einer Vorrichtung 100 gemäß einem Ausführungsbeispiel der vorliegenden Erfindung. Die Vorrichtung 100 weist einen Störobjektextraktor 110 und einen Ergebnisbilderzeuger 120 auf. Der Störobjektextraktor 110 erhält ein Quell-GPR Bild 110a und ein Referenzbild 110b. Auf Grundlage des Quell-GPR Bildes 110a und des Referenzbildes 110b bestimmt der Störobjektextraktor 110 ein Quotientenbild und extrahiert zumindest ein Störobjekt 110c basierend auf dem Quotientenbild. Der Ergebnisbilderzeuger 120 erhält das zumindest eine Störobjekt 110c und erzeugt zumindest ein Ergebnis-GPR Bild 120a basierend auf dem zumindest einen extrahierten Störobjekt 110c.

Bei dem Quell-GPR Bild 110a kann es sich bspw. um ein GPR Bild aus einer Mehrzahl von zeitlich aufeinanderfolgenden GPR Bildern handeln, die aus einer Sequenz von einer Mehrzahl von aufgenommen GPR Bildern erzeugt wurde. Bei dem Quell-GPR Bild 110a kann es sich bspw. insbesondere um ein zweidimensionales GPR Bild handeln. Das Referenzbild 110b kann ein Mittelwertbild aus einer Vielzahl von störungsfreien GPR Bildern sein, bspw. aus der Sequenz der Mehrzahl der aufgenommenen GPR Bilder. Ferner kann das Referenzbild 110b aber auch ein einzelnes, bspw. bevorzugt ungestörtes, GPR Bild sein. Zur Extraktion des Störobjekts 110c ist der Störobjektextraktor 110 ausgebildet, um ein Quotientenbild zu erzeugen, welches Unterschiede zwischen dem Referenzbild 110b und dem Quell-GPR Bild 110a aufweisen kann. Bspw. wenn das Referenzbild 110b nicht dasselbe Störobjekt wie das Quell-GPR Bild 110a aufweist, kann das im Quell-GPR Bild 110a vorhandene Störobjekt in dem Quotientenbild als Unterschied zwischen dem Quell-GPR Bild 110a und dem Referenzbild 110b angezeigt und damit auch extrahiert werden. Das extrahiere Störobjekt 110c kann dann von dem Ergebnisbilderzeuger 120, bspw. durch Einsetzen in das Referenzbild 110b, oder ein weiteres GPR Bild (z.B. zweites GPR Bild), z.B. zusätzlich unter Veränderung des Störobjekts, bspw. bezüglich einer Position im Bild, den zugehörigen Grauwerten, und/oder einer Skalierung, zur Erzeugung des Ergebnis-GPR Bildes verwendet werden.

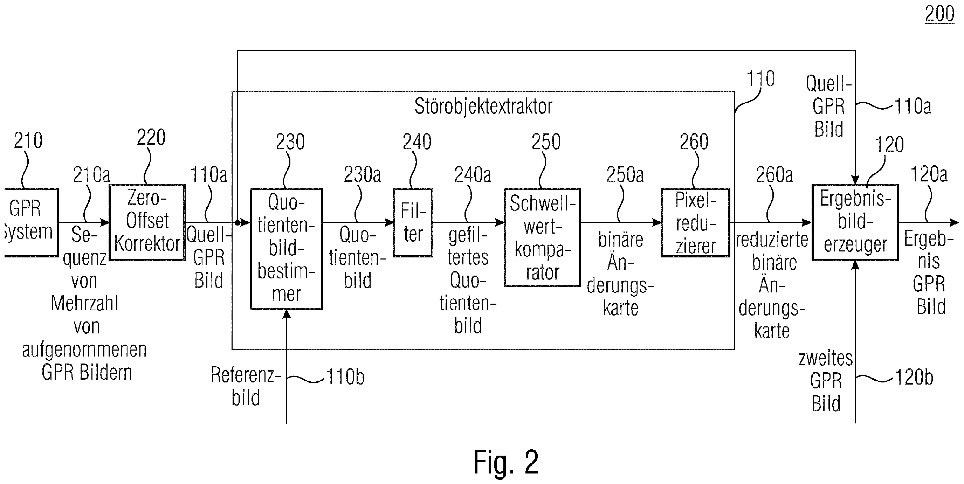

Fig. 2 zeigt ein schematisches Blockschaltbild einer Vorrichtung 200 gemäß einem Ausführungsbeispiel. Hierbei weist die Vorrichtung 200 Ergänzungen gegenüber der Vorrichtung 100 auf. Es wird darauf hingewiesen, dass diese Ergänzungen einzeln aber auch in Kombination optional sind, auch innerhalb entsprechend bereits beschriebener Elemente, wie dem Störobjektextraktor. Dabei sei ferner darauf hingewiesen, dass die jeweiligen optionalen Elemente sowohl individuell als auch in beliebigen Kombination als optionale Merkmale anzusehen sind.

Die Vorrichtung 200 weist ein GPR System 210 zur Datenaufnahme auf. GPR System 210 stellt eine Sequenz 210a von einer Mehrzahl von aufgenommenen GPR Bildern bereit. Bei der Sequenz 210a kann es sich dabei um eine Mehrzahl von zeitlich aufeinanderfolgenden GPR Bildern handeln, wie sie beispielsweise bei einer Abtastung durch ein bewegliches GPR System 210 aufgenommen werden kann. Die Sequenz 210a umfasst dabei eine Mehrzahl von Quellen-GPR Bildern, welche beispielsweise zweidimensionale GPR Bilder sein können.

Bei dem GPR System 210 kann es sich dabei ferner um ein mehrkanaliges Bodenradar oder um ein einkanaliges Bodenradar, welches parallel zueinander angeordnete Messbahnen aufweist, handeln. Ferner umfasst die Vorrichtung 200 einen Zero-Offset Korrektor 220 welcher die Sequenz 210a von dem GPR System 210 erhält. Der Zero-Offset Korrektor 220 ist dabei dazu ausgebildet eine Zero-Offset Korrektur der Sequenz 210a durchzuführen. Die Korrektur kann beispielsweise einen Ausgleich eines variierenden Abstands zwischen einem Sensor, der zur Aufnahme der Sequenz 210a verwendet wurde, und einer Bodenoberfläche, welche durch den Sensor abgetastet wurde, umfassen. Ferner kann der Zero-Offset Korrektor 220, beispielsweise im Zuge der Zero-Offset Korrektur, die Sequenz 210a bezüglich einer variierenden Bodensignatur normieren. Damit kann beispielsweise ein unerwünschter Einfluss einer variierenden Bodenbeschaffenheit auf die Störobjektextraktion verringert werden. Der Zero-Offset Korrektor 220 stellt folglich ein korrigiertes Quell-GPR Bild 110a oder eine Sequenz einer Mehrzahl von korrigierten aufgenommenen GPR Bildern für den Störobjektextraktor 110 der Vorrichtung 200 bereit.

Der Störobjektextraktor 110 weist einen Quotientenbildbestimmer 230 auf, welcher das Quell-GPR Bild 110a erhält. Der Quotientenbildbestimmer 230 bestimmt auf Basis des Quell-GPR Bildes 110a und eines Referenzbildes 110b ein Quotientenbild 230a. Bei dem Referenzbild 110b kann es sich beispielsweise um ein Mittelwertbild aus einer Vielzahl von störungsfreien GPR Bildern der Sequenz der Mehrzahl der aufgenommenen GPR Bilder handeln. Die zur Mittelung verwendeten GPR Bilder können dabei insbesondere zero-offset-korrigiert sein. Bei dem Referenzbild kann es sich jedoch auch um ein einzelnes ungestörtes GPR Bild handeln. Es sei nochmal darauf hingewiesen, dass ungestört im Hinblick auf das Referenzbild ein Fehlen von Störobjekten beschreibt, sodass das Bild noch von anderen unerwünschten, verfahrensbedingten Effekten wie beispielsweise Bildrauschen betroffen sein kann.

Der Störobjektextraktor 110 weist darüber hinaus ein Filter 240 auf, welches das Quotientenbild 230a erhält. Das Filter 240 kann zuvor erläuterte unerwünschte Effekte, wie beispielsweise Bildrauschen in Form von Rauschpixeln, verringern und/oder unterdrücken. Ferner kann es sich bei dem Filter um ein strukturerhaltendes, morphologisches Filter handeln, welches Zusammenhangskomponenten des Quotientenbildes in Abhängigkeit ihrer Größe löscht oder erhält. Dadurch kann eine Vorauswahl getroffen werden, wodurch das Quotientenbild, welches einfach ausgedrückt einen Unterschied zwischen einem entsprechenden Quell-GPR Bild 110a und dem Referenzbild 110b anzeigt, von Zusammenhangskomponenten befreit werden kann, welche kleiner sind als Zusammenhangskomponenten eines zu erwartenden Störobjektes. Damit kann die Robustheit und Qualität der Störobjektextraktion des Störobjektextraktors 110 verbessert werden.

Zum besseren Verständnis soll ein kurzes, nicht einschränkendes Beispiel gegeben werden. Das Filter, bspw. ein ASF, kann an dieser Stelle so vorgehen, dass das Quotientenbild, bspw. eine bestimmte Anzahl von bspw. 256 Grauwertstufen aufweist, wobei andere Anzahlen ohne weiteres möglich sind. Das Quotientenbild kann, in entsprechende Binärbilder zerlegt werden, bspw. in eine entsprechende Anzahl von Binärbilder. Für jedes dieser Binärbilder können darin befindliche Zusammenhangskomponenten, bspw. durch Betrachtung der Nachbarschaft eines Pixels, bestimmt werden. Die Nachbarschaft kann bspw. eine 2er, 4er oder 8er oder eine andere Nachbarschaft sein oder beliebig anders dimensioniert werden. Das Filter kann daraufhin für jedes Binärbild prüfen, welche der darin befindlichen Zusammenhangskomponenten kleiner oder größer der vorgegebenen Pixelanzahl sind.

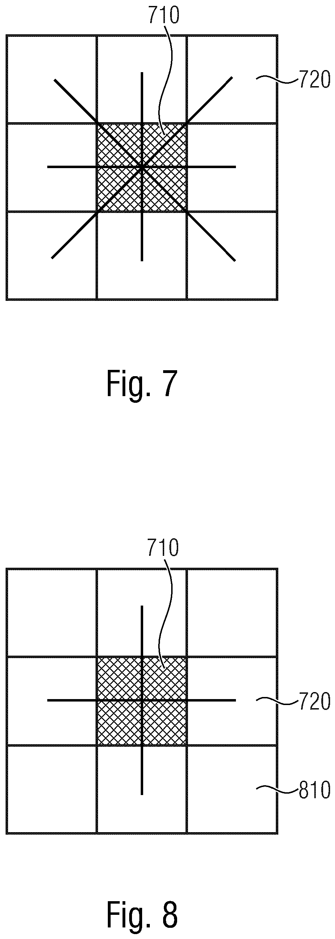

Zur Erläuterung der Nachbarschaft wird auf Figuren 7 und 8 verwiesen. Figuren 7 und 8 zeigen jeweils eine Anordnung von 9 Pixeln. Figuren 7 und 8 zeigen jeweils ein zentrales Pixel 710, sowie dessen Nachbarschaft, welche umliegende Pixel umfasst. Der Fall einer 8er Nachbarschaft ist in Fig. 7 gezeigt. Alle 8 umliegenden Pixel 720 werden, bspw. zur Bestimmung der Zusammenhangskomponenten, als Nachbar des Pixels 710 berücksichtigt. Fig. 8 zeigt den Fall einer 4er Nachbarschaft. Nur die 4 Pixel 720, hier als Beispiel in horizontaler und vertikaler Nachbarschaft, werden als Nachbar von Pixel 710 berücksichtigt, wobei die weiteren Pixel 810, hier als Beispiel diagonal zu Pixel 710, nicht berücksichtigt werden.

Weiter weist der Störobjektextraktor 110 einen Schwellwertkomparator 250 auf, welcher das gefilterte Quotientenbild 240a erhält. Der Schwellwertkomparator 250 ist ausgebildet, um das Quotientenbild 240a einem Schwellwertvergleich zu unterziehen, und kann damit eine binäre Änderungskarte 250a bestimmen. Zur Erstellung eines Binärbilds aus einem Grauwertbild kann ein spezifischer Grauwert als Schwellwert vorteilhaft oder sogar notwendig sein. Das Filter zur Glättung des Quotientenbildes kann dabei dazu dienen, potentielle Falschdetektionen zu verringern oder gar zu eliminieren. Es kann aber also bspw. per Definition nicht dazu geeignet sein, einen Schwellwert zur Binarisierung des Quotientenbildes bereitzustellen, weswegen bspw. der Schwellwertkomparator bei Ausführungsbeispielen Verwendung findet.

Allein durch Anwendung eines Schwellwerts zur Binarisierung des Quotientenbildes können Fehldetektionen bspw. jedoch unter Umständen nicht vermieden werden. Eine derartige Vermeidung kann gemäß Ausführungsbeispielen dadurch bereitgestellt werden, dass das gefilterte Quotientenbild einem Schwellwertvergleich unterzogen wird. Somit kann bspw. das Filter dafür, also bspw. zur Vermeidung von Fehldetektionen, "verantwortlich" sein, nicht zwingend der Schwellwertvergleich selbst. Anhand des Schwellwertes, bspw. einer Mindest-Grauwert-Änderung, kann der Schwellwertkomparator 250 beispielsweise eine binäre Entscheidung treffen, sodass bspw. jeder Grauwert eines Pixel des gefilterten Quotientenbildes 240a auf einen Wert aus einem zweielementigen Wertebereich reduziert werden kann, wobei der jeweilige Wert ein Erfüllen oder Unterschreiten des Schwellwertes anzeigt. Durch die Informationsextraktion, welche zur Erzeugung der binären Änderungskarte 250a führt, kann im Vergleich zu einem Ursprungs-Quell-GPR Bild, zum Beispiel durch den Wegfall von konkreten Grauwerten und der Beschreibung von Änderungen durch einen binären Wert eine z.B. starke Datenkompression und/oder Datenreduktion im Hinblick auf die Störobjektextraktion erzielt werden

Als weiteres Element kann der Störobjektextraktor 110 einen Pixelreduzierer 260 aufweisen, welcher die binäre Änderungskarte 250a erhalten kann. Der Pixelreduzierer 260 löscht binäre Zusammenhangskomponenten der binären Änderungskarte 250a, die mit einer Mindestgröße des Störobjektes assoziiert sind. Anders ausgedrückt können Zusammenhangskomponenten gelöscht werden, die beispielsweise kleiner sind als Zusammenhangskomponenten von einem zu erwartenden Störobjekt. Dadurch kann der Pixelreduzierer 260 Änderungspixel der binären Änderungskarte 250a reduzieren. Somit kann der Pixelreduzierer 260 eine reduzierte binäre Änderungskarte 260a bereitstellen. Die Änderungskarte 260a enthält dann beispielsweise nur noch Informationen, welche mit der Position eines zu extrahierenden Störobjekt aus dem Quell-GPR Bild 110a zusammenhängen. Anders ausgedrückt kann die Änderungskarte 260a den zu extrahierenden Bereich des Quell-GPR Bildes 110a, welcher das Störobjekt umfasst, anzeigen und/oder zum Beispiel diesen alleinig aufweisen. Es sei darauf hingewiesen, dass zum einfacheren Verständnis die bisherigen Erläuterungen sich hauptsächlich auf ein Störobjekt bezogen haben, jedoch analoge Verarbeitungsschritte und Ergebnisse für eine Vielzahl von Störobjekten eines Quell-GPR Bildes 110a durchgeführt bzw. erzielt werden können. Die Erstellung der reduzierten binären Änderungskarte 260a kann dabei als Störobjektextraktion aufgefasst werden, da durch die Änderungskarte 260a die Information über das Störobjekt und damit das Störobjekt aus dem Quell-GPR Bild 110a extrahiert ist. Ferner kann der Störobjektextraktor 110 aber auch neben der Änderungskarte 260a das Quell-GPR Bild 110a bereitstellen, sodass das extrahierte Störobjekt vollständig beschrieben ist.

Die Vorrichtung 200 kann den Ergebnisbilderzeuger 120 aufweisen. Der Ergebnisbilderzeuger 120 erhält das Quell-GPR Bild 110a, sowie die reduzierte binäre Änderungskarte 260a von dem Störobjektextraktor 110. Diese beiden Eingangsgrößen des Ergebnisbilderzeugers 120 können beispielsweise dem extrahierten Störobjekt 110c aus Fig. 1 entsprechen. Ferner erhält der Ergebnisbilderzeuger 120 ein zweites GPR Bild 120b. Somit kann der Ergebnisbilderzeuger 120 zur Erzeugung von zumindest einem Ergebnis-GPR Bild 120a das extrahierte Störobjekt, beispielsweise in Form des Quell-GPR Bildes 110a und der reduzierten binären Änderungskarte 260a, in das zweite GPR Bild 120b einfügen, um Trainingsdaten zu erzeugen. Bei dem zweiten GPR Bild 120b kann es sich dabei beispielsweise um das Referenzbild 110b oder eine andere Bildgrundlage, in welche das Störobjekt zu Generierung späterer Trainingsdaten eingefügt werden soll, handeln. Dadurch kann beispielsweise sichergestellt werden, dass das Störobjekt in ein störungsfreies GPR Bild eingefügt wird, um beispielsweise eine bestimmte Form von Trainingsdaten zu erhalten, die wie zum Beispiel nur ein Störobjekt aufweisen sollen. Zur Erzeugung des Ergebnis-GPR Bildes 120a kann der Ergebnisbilderzeuger 120 dabei beispielsweise das extrahierte Störobjekt, eine Position des extrahierten Störobjekts, eine Skalierung des extrahierten Störobjekts, und/oder eine Grauwertintensität des extrahierten Störobjekts im Vergleich zu dem Quell-GPR Bild 110a, aus welchem das eine Störobjekt extrahiert wurde, verändern.

Dadurch kann eine große Menge von Trainingsdaten erzeugt werden, beispielsweise mit speziellen Eigenschaften im Hinblick auf das Training eines Algorithmus, wobei die Eigenschaften durch die jeweilige Manipulation und/oder Veränderung und/oder Abwandlung (bspw. Positionsänderung, Skalierung, Grauwertänderung) des extrahierten Störobjekts vor dem Einfügen in das zweite GPR Bild 120b eingestellt werden können. So können beispielsweise verschiedene Klassen von Trainingsdaten erzeugt werden, die entsprechend des jeweiligen Algorithmus, beispielsweise aus dem Bereich des Machine Learnings, zum Training verwendet werden können. Die Erzeugung des Ergebnis-GPR Bildes 120a kann dann beispielsweise durch eine Mittelwertbildung zwischen dem Quell GPR Bild 110a und dem zweiten GPR Bild 120b für jedes Pixel der reduzierten binären Änderungskarte 260a erfolgen.

Die Vorrichtung aus Fig. 2 bzw. ein zugehöriges Verfahren, kann ein Beispiel einer erfindungsgemäßen alternativen Vorgehensweise bilden, um den mit der Akquisition von geeigneten Trainingsdaten, bspw. zur Neukonstruktion eines Neuronalen Netzes ohne Rückgriff auf TL-Methoden, verbunden Aufwand bspw. deutlich zu verringern, z.B. im Hinblick auf bisherige Methoden des Stands der Technik.

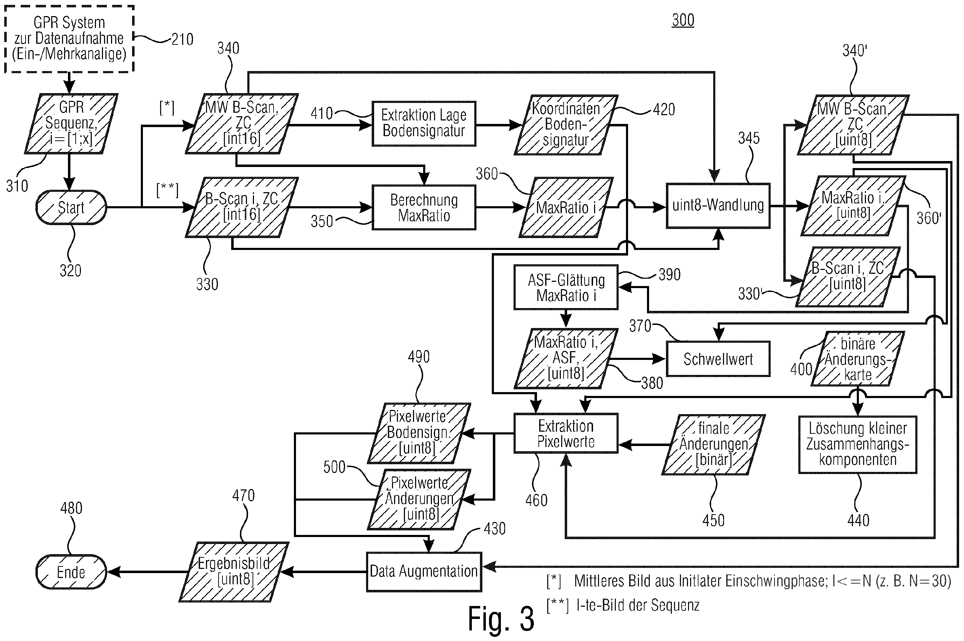

Anhand der Figuren 3, 4 und 5 werden weitere Ausführungsbeispiele gemäß der Erfindung beschrieben. Fig. 3 zeigt ein schematisches Ablaufdiagramm eines Verfahrens 300 gemäß einem Ausführungsbeispiel, das in hierin beschriebenen Vorrichtungen ausgeführt werden kann und auch als Arbeitsablauf einer solchen Vorrichtung verstanden werden kann, weswegen die Fig. 3 auch Bezug nimmt auch gegenständliche Komponenten einer Vorrichtung oder eines Systems. Das Ablaufdiagramm zeigt den Arbeitsablauf eines Ausführungsbeispiels. Parallelogramme stellen dabei Daten und Rechtecke Arbeitsschritte dar.

Ein GPR System 210 kann zur Datenaufnahme eingesetzt werden und kann ein-/oder mehrkanalig ausgebildet sein. Die beispielsweise durch das GPR System 210 erfassten GPR-Sensordaten können dabei zur Detektion von Objekten im Boden erfasst werden. Das "reine" Bodensignal ohne Objektbeteiligung kann in diesem Zusammenhang auch als Bildhintergrund bezeichnet werden. Wird ein Objekt im Boden erfasst und abgebildet, überlagert dessen Signatur als Bildvordergrund bzw. Störobjekt den Bildhintergrund.

Zur Erstellung beziehungsweise zur Vergrößerung eines Trainingsdatenbestands aus GPR-Bilddaten kann eine erfindungsgemäße Bildverarbeitungstechnik zum Einsatz kommen, die darauf abzielt, den Bildvorder- vom Bildhintergrund zu separieren. Einer der Kernaspekte oder bspw. sogar das Hauptaugenmerk dieser Separierung können sogenannte Störobjekte, die in der vorliegenden Beschreibung den Bildvordergrund darstellen, bilden. Im Anschluss an die Separierung können neue GPR-Bilder durch Variation des Störobjekts bspw. hinsichtlich Ort, Skalierung und Grauwertintensität künstlich erzeugt werden (bspw. unter Verwendung von Methoden und Techniken der Data Augmentation).

In der Data Augmentation können Methoden verwendet werden, um den Bestand an Trainingsdaten zu vergrößern. Hierbei können in den Bilddaten abgebildete Artefakte beziehungsweise Störungen erkannt, extrahiert und innerhalb des Bilds an verschiedene Stellen verschoben werden. Ausführungsbeispiele der Erfindung können als neuartige Vorgehensweise im Hinblick auf Data Augmentation aufgefasst werden.

Der Arbeitsablauf gemäß einem Ausführungsbeispiel ist in Fig. 3 dargestellt. Nachfolgend wird dieser schrittweise erläutert.

Als Datengrundlage wird bspw. zumindest eine 310 (GPR Sequenz, i=[1;x] mit Laufindex i mit einer Gesamtzahl x von GPR Bildern) aus zeitlich aufeinanderfolgenden GPR-Bilddaten verwendet. Die Zweidimensionalität der Daten kann bspw. durch Nutzung eines mehrkanaligen Bodenradars erreicht werden, das bei jeder Messung ein Bild aufzeichnet, mit n Bildspalten orthogonal zur Bewegungsrichtung des Sensors, also bspw. des Sensors des Bodenradars, welcher das Bild aufnimmt. Alternativ können zweidimensionale GPR-Bilddaten auch bspw. durch parallel zueinander angeordnete Messbahnen eines einkanaligen Systems erstellt werden. Die Anzahl m der Bildzeilen kann die durch sensorbezogene Parameter festgelegte Anzahl der Tiefenpunkte repräsentieren. Durch Fortbewegung des Sensors entlang einer Messstrecke kann aus p GPR-Bildern ein dreidimensionaler Datenkubus der Größe m × n × p entstehen.

Auf Basis der Bilddatensequenz wird zunächst eine so genannte Zero-Offset-Korrektur (Korrektur des Nulldurchgangs des Signals) durchgeführt, die einerseits zum Ziel hat, einen über die Sequenz variierenden Abstand zwischen Sensor und Bodenoberfläche auszugleichen und andererseits eine variierende Bodensignatur zu normieren. Dieser Vorverarbeitungsschritt ist besonders vorteilhaft für weitere Verarbeitungsschritte, die darauf abzielen, den Hintergrund eines GPR-Bilds in robuster Weise zu schätzen. Die Zero-Offset-Korrektor findet bspw. vor dem Start 320 der weiteren Bildverarbeitung statt. Im weiteren wird die Abkürzung ZC verwendet um anzuzeigen, dass entsprechende GPR Bilder zero-offset-korrigiert sind. Die korrigierte Bilddatensequenz ist die Grundlage für die Extraktion von Störobjekten.

Zur Extraktion von Störobjekten als Bildvordergrund kommt eine Methode zur Änderungsdetektion zum Einsatz, die im Bereich der SAR-Bildanalyse (SAR = Synthetische Apertur Radar) weit verbreitet ist. Diese Methode basiert auf der Berechnung eines Quotientenbilds aus einem Eingabe-Bildpaar. Hierfür wird jeweils das, bspw. aktuelle, aufgenommene Bild 330 (B-Scan i, ZC [int16] Zero-offset korrigierter B-Scans mit Grauwerten in einem 16 stelligen Integer-Bereich mit Laufindex i, anders ausgedrückt das i-te-Bild der Sequenz 310. Bild 330 kann bspw. Quell-GPR Bild 110a aus Fig. 1 und 2 entsprechen) der Sequenz und ein aus einer sogenannten "Einschwingphase" des Systems entstandene, mittlere Hintergrundbild 340 (MW B-Scan ZC [int16], Mittelwertbild in Form eines zero-offset korrigierten B-Scans mit Grauwerten in einem 16 stelligen Integer-Bereich, welches aus einer initialen Einschwingphase; i<=N (z.B.: N = 30), wobei N die Anzahl der GPR Bilder die zur Bestimmung des Hintergrundbildes bzw. mittleren Bildes verwendet werden, angibt) verwendet.

Ein B-Scan kann sich dabei bei Nutzung eines mehrkanaligen Sensors aus den gleichzeitig am Empfänger registrierten Einzelmessungen der entsprechenden Kanäle zusammensetzen. Diese Kanalmessungen können dann die vertikal nach unten in den Untergrund "zeigenden" Messungen bilden. Wird beispielsweise ein System mit 15 Kanälen genutzt, so besteht ein B-Scan aus 15 Spalten. Die Zeilen ergeben sich aus der Eindringtiefe des Sensors in den Untergrund.

Das mittlere Hintergrundbild kann bspw. das Referenzbild 110b aus Fig. 2 sein. In anderen Worten kann das Mittelwertbild das sogenannte Referenzbild sein. Es kann aus den bspw. möglichst störfreien Bildern der initialen Einschwingphase bestimmt werden, z.B. einfach über eine Mittelwertbildung, d.h. aufsummierter Bildstapel aus einer Anzahl von N B-Scans geteilt durch die Anzahl N. Die Einschwingphase ist je nach zugrundeliegenden Aufnahmeparametern zu wählen, wobei Aufnahmefrequenz und Fahrgeschwindigkeit des Sensors wichtige Parameter bilden. Um ein repräsentatives Mittelwertbild des ungestörten Hintergrunds zu gewährleisten, kann es vorteilhaft sein, z.B. mindestens 30 zielfreie, d. h., frei von Störobjekten, Zielen, B-Scans zu Beginn der Sequenz aufgenommen werden. Weiterhin ist es vorteilhaft, , dass die Bodenverhältnisse des zielfreien Untergrunds mit denen des zu analysierenden Untergrunds gut oder bspw. möglichst genau übereinstimmen.

Die Änderungsdetektion erfolgt in Ausführungsbeispielen unüberwacht mittels einer Berechnung 350 (MaxRatio, bspw. Bestimmung eines Quotienten von Grauwerten einzelner Pixel der Eingabe-Bilder und zugehöriger inverser Werte und anschließender Maximumsbildung) des Quotientenbilds 360 aus dem Eingabe-Bildpaar. Die Berechnung 350 des Quotientenbildes 360 kann dabei beispielsweise von dem Quotientenbildbestimmer 230 aus Fig. 2 durchgeführt werden. Das Quotientenbild 360 aus Fig. 3 entspricht dann beispielsweise dem Quotientenbild 230a aus Fig. 2.

Optional ist in Fig. 3 eine Formatänderung 345 (uint8-Wandlung, bspw. Wandlung zu Format mit vorzeichenfreien 8-stelligen Integern zur Beschreibung der Grauwerte) gezeigt, welche die Formate des aufgenommenen Bildes 330, des Quotientenbildes 360 und des mittleren Hintergrundbildes 340 zu korrespondierenden Bildern 330', 360'und 340'wandelt. Hierdurch können morphologische Bildverarbeitungsprozesse (z.B. ASF) verwendet werden, welche bspw. Grauwertbilder mit einer uint8-Dynamik [0;255] benötigen oder verwenden können.

Anschließend an die Berechnung des Quotientenbildes aus dem Eingabe-Bildpaar erfolgt bspw. ebenfalls unüberwacht, eine Schwellwertberechnung 370 (Schwellwert) durch ein entropiebasiertes Verfahren (bspw. Verfahren nach Rényi, siehe [Sahoo et al., 2004]). Die Schwellwertberechnung 370 erfolgt dabei auf Basis des Quotientenbildes 360', und/oder eines gefilterten Quotientenbildes 380. Die Schwellwertberechnung 370 kann beispielsweise vom Schwellwertkomparator 250 aus Fig. 2 bereitgestellt werden. Ferner kann das gefilterte Quotientenbildes 83 aus Fig. 3 dem gefilterten Quotientenbildes 240a aus Fig. 2 entsprechen.

Die Schwellwertberechnung 370, bspw. umfassend die Methode nach Renyi, kann gemäß Ausführungsbeispielen die Berechnung und Auswertung eines zweidimensionalen Histogramms, entstanden aus zwei Eingangsbildern aufweisen. Das Eine davon kann das Original (hier: Quotientenbild) repräsentieren, das Zweite zur Simulation des lokalen Hintergrunds des Originals (hier: geglättetes oder gefiltertes Quotientenbild) dienen. Auf Basis dieser zwei Bilder kann für anhand jedes möglichen Grauwertpaars dieses 2D-Bildstapels das 2D-Histogramm erstellt werden. Dieses Histogramm kann weiterhin zur Berechnung aus Auswertung der Vorder- und Hintergrund-Entropien dienen, woraus sich letztlich der Schwellwert ergibt. Es sei darauf hingewiesen, dass bei Ausführungsbeispielen die Begriffe "geglättet" und "gefiltert", bspw. aufgrund der Funktion oder Arbeitsweise des Filters, gleichbedeutend sein können.

Um mögliche Falschdetektionen durch Rauschpixel im Quotientenbild 360' zu vermeiden, wird zunächst eine Filterung 390 (ASF-Glättung MaxRatio i) mittels eines Alternating Sequential Filter (ASF) durchgeführt. Ein ASF ist ein strukturerhaltendes morphologisches Filter, das die für einen spezifischen Grauwert in einem Bild enthaltenen Zusammenhangskomponenten entsprechend ihrer Größe löscht oder erhält [Boldt et al., 2019]. Die Filterung 390 kann dabei beispielsweise durch das Filter 240 von Fig. 2 durchgeführt werden.

Nach Anwendung der Schwellwertberechnung resultiert eine binäre Karte 400 (welche bspw. der binären Änderungskarte 250a von Fig. 2 entspricht) mit potentiellen Änderungen im Bildvordergrund. Durch die sukzessiv durchgeführte Zero-Offset-Korrektur (s.o.) ist die Lage der Bodensignatur bekannt, weshalb sie als stationäre Signatur nach der Änderungsdetektion aus der binären Karte herausgelöscht werden kann. Die Extraktion 410 der Lage der Bodensignatur erfolgt dabei auf Grundlage des mittleren Hintergrundbilds 340 und liefert die Koordinaten der Bodensignatur 420.

Bevor der separierte Bildvordergrund als Eingabe für die Data Augmentation 430 genutzt wird, wird eine Reduzierung 440 (Löschung kleiner Zusammenhangskomponenten) möglicher, durch Rauschen verursachten Änderungspixel durchgeführt. Dieser Schritt kann bspw. im Pixelreduzierer 260 aus Fig. 2 realisiert werden. Hierbei werden binäre Zusammenhangskomponenten kleiner einer Anzahl an Pixeln gelöscht, die mit der Mindestgröße eines gesuchten Störobjekts übereinstimmt. Dadurch wird eine reduzierte binäre Änderungskarte 450 (bspw. entsprechend 260a aus Fig. 2) erzeugt, welche beispielsweise die binären finalen Änderungen umfasst, zum Beispiel die Änderungen im Quotientenbild.

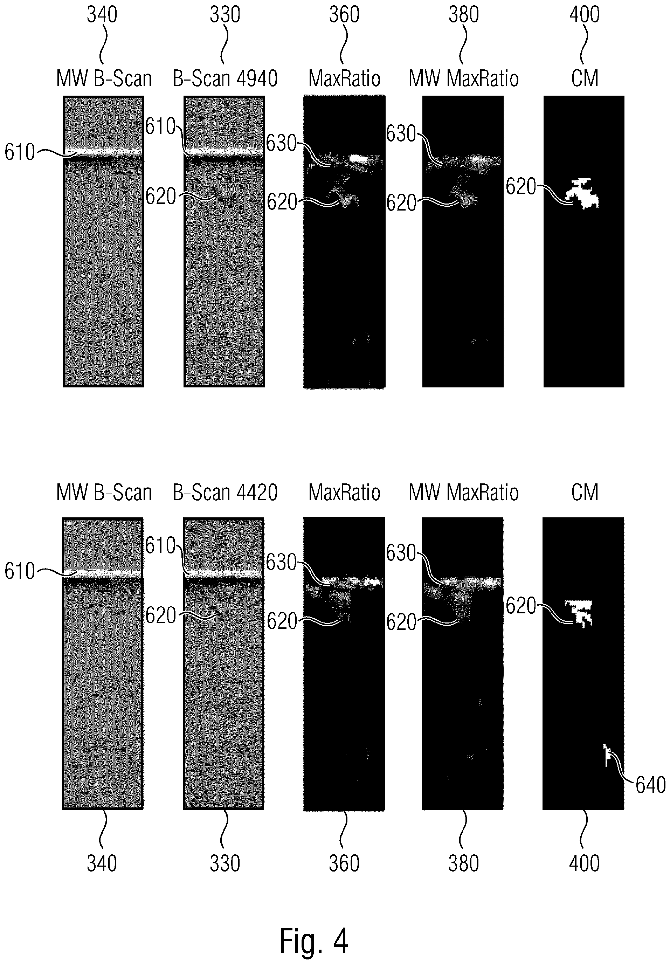

Im Folgenden sollen anhand Fig. 4 Beispiele für Zwischenergebnisse der erfindungsgemä-ßen Bildverarbeitung veranschaulicht werden.

Fig. 4 beinhaltet anhand zweier Beispiel-B-Scans eine Darstellung der Bilder, denen im Arbeitsablauf bspw. eine wichtige oder sogar zentrale Bedeutung zukommen kann. Fig. 4 zeigt (Zwischen-)Ergebnisbilder des Arbeitsablaufs aus Fig. 3, für zwei exemplarische B-Scans (Obere Reihe: 4940; untere Reihe: 4420) einer Sequenz bspw. Sequenz 310 aus Fig. 3. Von links nach rechts: Zielfreies, mittleres Hintergrundbild 340 aus Einschwingphase (MW B-Scan); i-tes GPR-Bild 330, hier Nr. 4940 bzw. 4420; Quotientenbild (MaxRatio) 360; gefiltertes Quotientenbild (MW MaxRatio) 380; binäre Änderungskarte (CM) 400. In Fig. 4 ist in den mittleren Hintergrundbildern 340 und den GPR Bildern 330 die normierte Bodensignatur 610 zu erkennen. Die Bodensignatur ist in allen Bildern an der gleichen relativen Position im Vergleich zum Rest des Bildes, was auf die Zero-Offset Korrektur zurückzuführen ist. Ferner ist in den GPR Bildern 330 ein Störobjekt 620 zu erkennen. In den Quotientenbildern 360 sind deutlich die Unterschiede zwischen mittlerem Hintergrundbild 340 bzw. Referenzbild und dem jeweiligen GPR Bild 330 bzw. Quell-GPR Bild zu erkennen. Jedoch ist nicht nur jeweils das Störobjekt 620 in den Quotientenbildern 360 vorhanden, sondern auch weitere Artefakte 630. Durch die anschließende Filterung und den Schwellwertvergleich sind die Störobjekte 620 in der binären Änderungskarte 400 deutlich erkennbar. Durch die Filterung können sie einfach und fehlerarm extrahiert werden, bzw. ihre Position kann einfach und fehlerarm bestimmt werden. In der unteren Änderungskarte 400 ist neben dem Störobjekt noch ein weiteres Artefakt 640 zu erkennen. Dieses kann beispielsweise durch einen Pixelreduzierer (bspw. 260 aus Fig. 2) bzw. die Reduzierung 440 von Fig. 3 durch das Löschen binärer Zusammenhangskomponenten der binären Änderungskarte 400 kleiner einer Anzahl von Pixeln, die mit einer Mindestgröße des Störobjekts assoziiert sind, entfernt werden.

Als Eingabe für den letzten Verarbeitungsschritt, der Data Augmentation 430, werden die in der Änderungskarte 450 enthaltenen Änderungspixel genutzt. Hierfür wird die Original-Grauwertintensität an den Stellen dieser Pixel aus dem ursprünglichen GPR-Bild 330' (hier: i-tes GPR-Bild) extrahiert 460 (Extraktion Pixelwerte) und z.B. an veränderter Position in das mittlere, zielfreie Bild 340' der Einschwingphase eingetragen. Dies ergibt das Ergebnisbild 470 (Ergebnisbild [uint8]) des Prozessablaufs, was bspw. das Ende 480 der Verarbeitungsabfolge bilden kann. Für die Eintragung wird für jede Änderungspixel-Position der Mittelwert aus dem i-ten GPR-Bild und dem Bild der Einschwingphase berechnet. Diese Werte werden danach vorzeichengetreu im Ergebnisbild an die entsprechenden Bildkoordinaten eingetragen.

In anderen Worten können zur Extraktion 460 der Pixelwerte die Änderungskarte 450, welche die Position und/oder Lage des Störobjekt anzeigt, und die Koordinaten 420 der Bodensignatur herangezogen werden. Durch diese können aus dem GPR Bild 330'und aus dem mittleren Hintergrundbild 340' die Pixelwerte der Bodensignatur 490 (Pixelwerte Bodensign. [uint8]) und die Pixelwerte der Änderungen 500 (Pixelwerte Änderungen [uint8]) bestimmt werden, auf Basis derer die Data Augmentation 430 zusammen mit dem mittleren Hintergrundbild 340' das Ergebnis Bild 470 erzeugen kann. Das Ergebnis Bild 470 ist dabei beispielsweise das Ergebnis-GPR Bild 120a aus Fig. 2, wobei die Data Augmentation 430 von dem Ergebnisbilderzeuger 120 aus Figuren 1 und 2 durchgeführt werden kann und wobei das dazu verwendete mittlere Hintergrundbild 340' dem zweiten GPR Bild 120b aus Fig. 2 entsprechen kann.

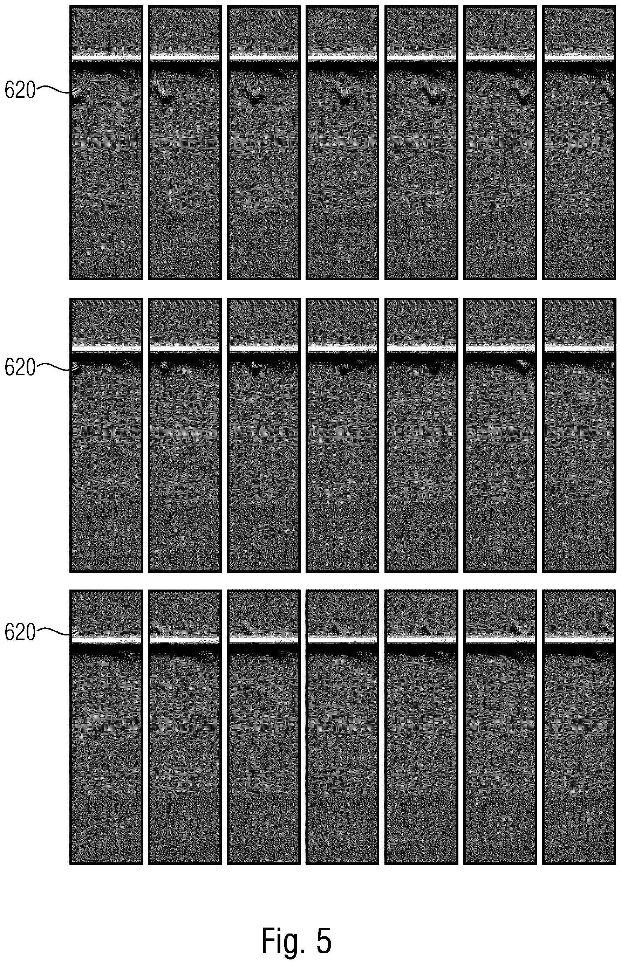

In Fig. 5 sind für eines der in Fig. 4 gegebenen beispielhaften oder exemplarischen GPR-Bilder die (Zwischen-)Ergebnisbilder der Data Augmentation visualisiert. Das jeweilige Störobjekt 620 wurde hierbei an drei verschiedenen Tiefen innerhalb des GPR-Bilds von links nach rechts verschoben. Fig. 5 verdeutlicht das enorme Potenzial von Ausführungsbeispielen gemäß der Erfindung zur Erzeugung von großen Mengen von Trainingsdaten. Obwohl in Fig. 5 nur jeweils eine Verschiebung des Störobjektes innerhalb desselben Bildes genutzt wurde, wurden aus jeweils einem Quell-GPR Bild sechs Ergebnis-GPR Bilder erzeugt. Durch die kombinatorischen Möglichkeiten eines Tauschs der Störobjekte 620 in den gezeigten Bildern untereinander, sowie der dazu zusätzlichen Möglichkeiten bspw. einer Skalierung und/oder Grauwertänderung, kann eine sehr große Menge von Trainingsdaten erzeugt werden.

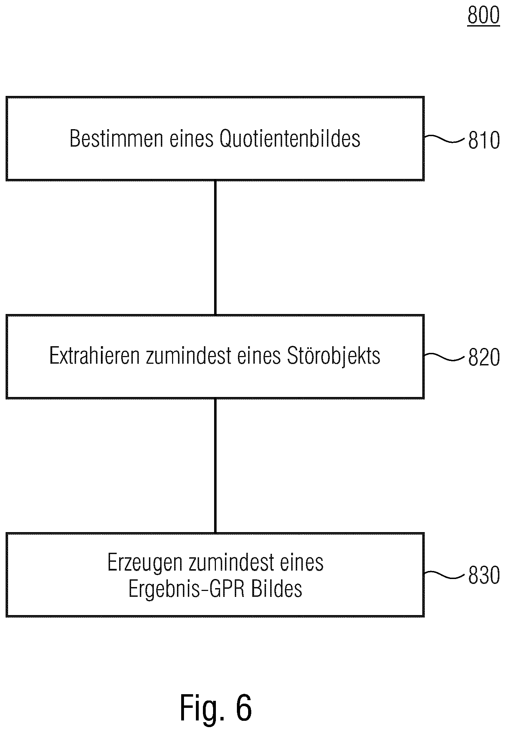

Im Folgenden soll anhand Fig. 6 ein Überblick über ein erfindungsgemäßes Verfahren gemäß einem Ausführungsbeispiel aufgezeigt werden. Fig. 6 zeigt ein Ablaufdiagramm eines Verfahrens 800 zur Erzeugung von Trainingsdaten für zweidimensionale Scans eines Bodenradar-Systems gemäß einem Ausführungsbeispiel der vorliegenden Erfindung. Das Verfahren weist
ein Bestimmen 810 eines Quotientenbildes aus einem Quell-GRP Bild mit einem Referenzbild; und
ein Extrahieren 820 zumindest eines Störobjekts aus dem Quell-GPR Bild, basierend auf dem Quotientenbild; und
ein Erzeugen 830 zumindest eines Ergebnis-GPR Bildes für das Quell-GPR Bild, abhängig von dem zumindest einen extrahierten Störobjekt, zur Erzeugung der Trainingsdaten, auf.

### Schlussfolgerungen und weitere Anmerkungen

Ganz allgemein weisen Ausführungsbeispiele der Erfindung den Vorteil, welcher bspw. der wichtigste Vorteil sein kann und der bspw. mit der Methode im Zusammenhang mit Figuren 3, 4 und 5 erläutert wurde, auf, dass ein Trainingsdatenbestand sehr schnell unter Einsatz einer geringen Anzahl an GPR-Bilddaten vergrößert werden kann. Dadurch ist eine massive Reduktion des Aufwands bei der Datenakquisition möglich. Voraussetzung für die Erstellung eines bspw. repräsentativen Bildhintergrunds, z.B. als Referenz für die Änderungsdetektion ist die Existenz einer ungestörten, z.B. im Hinblick auf Störobjekte ungestörte, Sequenz räumlich aufeinanderfolgender Bodenradarbilder (Einschwingphase). Durch Anwendung vollautomatischer Verarbeitungsschritte wie beispielsweise die Berechnung des Schwellwerts durch ein entropiebasiertes Verfahren (bspw. durch das Verfahren nach Rényi, siehe oben) kann ein hohes Maß an nutzerfreundlicher Bedienbarkeit erzielt oder bspw. sogar sichergestellt werden.

Ganz allgemein sind Ausführungsbeispiele der Erfindung nicht durch die konkrete genutzte Änderungsdetektion festgelegt. Beispielsweise kann die Auswertung von Quotientenbildern durch andere Verfahren ersetzt werden, welche zwar nach einer anderen Strategie vorgehen, aber vergleichbare Ergebnisse produzieren. Alternativ oder zusätzlich zu den genannten Konzepten kann das Quotientenbild z.B. mit anderen Methoden geglättet werden, bspw. unter Verwendung eines Medianfilters o.a. und/oder andere Methoden oder Strukturen zur Berechnung des Schwellwerts können genutzt werden. Je nach gewählter Methode könnten geringfügig andere Ergebnisse resultieren.

Ausführungsbeispiele gemäß der vorliegenden Erfindung weisen als wichtige oder bspw. sogar zentrale Schritte ihrer Prozesskette die quotientenbildbasierte Änderungsdetektion auf, die weiterhin die ASF-basierte Filterung und die Schwellwertberechnung mittels Entropie umfasst. Ferner kann die erfindungsgemäße Abfolge der Prozesskette zur Erstellung von Trainings- und/oder Testdaten bspw. zur Klassifikation von GPR-Bilddaten genutzt werden.

Ausführungsbeispiele gemäß der vorliegenden Erfindung sind darauf ausgelegt, basierend auf Bodenradar-Bilddaten mit relativ geringem Aufwand eine große Anzahl geeigneter Trainingsdaten für Machine Learning Anwendungen zu schaffen.

Alle hierin aufgeführten Aufzählungen der Materialien, Umwelteinflüsse, elektrischen Eigenschaften und optischen Eigenschaften sind hierbei als beispielhaft und nicht als abschließend anzusehen.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren auf-gezeichnet ist. Der Datenträger, das digitale Speichermedium oder das computerlesbare Medium sind typischerweise gegenständlich und/oder nichtvergänglich bzw. nicht-vorübergehend.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die hierin beschriebenen Vorrichtungen können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Vorrichtungen, oder jedwede Komponenten der hierin beschriebenen Vorrichtungen können zumindest teilweise in Hardware und/oder in Software (Computerprogramm) implementiert sein.

Die hierin beschriebenen Verfahren können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Verfahren, oder jedwede Komponenten der hierin beschriebenen Verfahren können zumindest teilweise durch Hardware und/oder durch Software ausgeführt werden.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Referenzen

Sahoo, P. K., Arora, G. (2004): A thresholding method based on two-dimensional Renyi's entropy, Pattern Recognition, Bd. 37, Nr. 6, S. 1149 - 1161.
Boldt, M., Thiele, A., Schulz, K., Meyer, F. J., Hinz, S. (2019): Practical approach for synthetic aperture radar change analysis in urban environments, Journal of Applied Remote Sensing, Bd. 13, Nr. 3, S. 034528-1 - 034528-29.
Soille, P., "Morphologische Bildverarbeitung: Grundlagen, Methoden, Anwendungen", Springer-Verlag Berlin Heidelberg, 1998, 316 Seiten, ISBN: 3540643230

## Patentansprüche

1. Vorrichtung (100, 200) zur Erzeugung von Trainingsdaten für zweidimensionale Scans eines Bodenradar-Systems,
wobei die Vorrichtung (100, 200) einen Störobjektextraktor (110) aufweist, der ausgebildet ist, um aus einem Quell-GPR Bild (110a, 330, 330') ein Quotientenbild (230a, 360, 360`) mit einem Referenzbild (110b, 340, 340`) zu bestimmen und zumindest ein Störobjekt (110c, 620), basierend auf dem Quotientenbild (230a), zu extrahieren; und
wobei die Vorrichtung (100, 200) einen Ergebnisbilderzeuger (120) aufweist, der ausgebildet ist, um für das Quell-GPR Bild (110a, 330, 330') zumindest ein Ergebnis-GPR Bild (120a, 470), basierend auf dem zumindest einen extrahierten Störobjekt (110c, 620) zu erzeugen, um die Trainingsdaten zu erzeugen.

2. Vorrichtung (100, 200) gemäß Anspruch 1, wobei der Ergebnisbilderzeuger (120) ausgebildet ist, um zur Erzeugung des zumindest einen Ergebnis-GPR Bildes (120a, 470), das zumindest eine Störobjekt (110c, 620) in ein zweites GPR Bild (120b) einzufügen.

3. Vorrichtung (100, 200) gemäß Anspruch 2, wobei das zweite GPR Bild (120b) das Referenzbild (110b, 340, 340') ist.

4. Vorrichtung (100, 200) gemäß einem der Ansprüche 2 bis 3, wobei der Ergebnisbilderzeuger (120) ausgebildet ist, um das zumindest eine Störobjekt (110c, 620) und/oder eine Position des zumindest einen Störobjekts (110c, 620) in dem zweiten GPR Bild (210b), im Vergleich zu dem Quell-GPR Bild (110a, 330, 330') zu verändern, um das zumindest eine Ergebnis-GPR Bild (120a, 470) zu erzeugen.

5. Vorrichtung (100, 200) gemäß einem der Ansprüche 2 bis 4, wobei der Ergebnisbilderzeuger (120) ausgebildet ist, um eine Skalierung des zumindest einen Störobjekts (110c, 620) in dem zweiten GPR Bild (120b), im Vergleich zu dem Quell-GPR Bild (110a, 330, 330') zu verändern, um das zumindest eine Ergebnis-GPR Bild (120a, 470) zu erzeugen.

6. Vorrichtung (100, 200) gemäß einem der Ansprüche 2 bis 5, wobei der Ergebnisbilderzeuger (120) ausgebildet ist, um eine Grauwertintensität des zumindest einen Störobjekts (110c, 620) in dem zweiten GPR Bild (120b), im Vergleich zu dem Quell-GPR Bild (110a, 330, 330') zu verändern, um das zumindest eine Ergebnis-GPR Bild (120a, 470) zu erzeugen.

7. Vorrichtung (100, 200) gemäß einem der vorherigen Ansprüche, wobei es sich bei dem Quell-GPR Bild (110a, 330, 330') um ein zweidimensionales GPR Bild handelt.

8. Vorrichtung (100, 200) gemäß einem der vorherigen Ansprüche, wobei das Quell-GPR Bild (110a, 330, 330') ein GPR Bild einer Mehrzahl von ersten GPR Bildern ist.

9. Vorrichtung (100, 200) gemäß Anspruch 8, wobei es sich bei der Mehrzahl der ersten GPR Bilder um eine Mehrzahl von zeitlich aufeinanderfolgenden GPR Bildern handelt, die aus einer Sequenz (210a, 310) von einer Mehrzahl von aufgenommenen GPR Bildern erzeugt wurden.

10. Vorrichtung (100, 200) gemäß Anspruch 9, wobei die Vorrichtung (100, 200) ausgebildet ist, um einen über in der Sequenz (210a, 310) der Mehrzahl der aufgenommenen GPR Bilder variierenden Abstand zwischen Sensor und Bodenoberfläche auszugleichen, um die Mehrzahl der ersten GPR Bilder zu erzeugen.

11. Vorrichtung (100, 200) gemäß einem der Ansprüche 9 bis 10, wobei die Vorrichtung (100, 200) ausgebildet ist, um eine in der Sequenz (210a, 310) der Mehrzahl der aufgenommenen GPR Bilder variierende Bodensignatur zu normieren, um eine normierte Bodensignatur (610) zu erhalten, und um die Mehrzahl der ersten GPR Bilder unter Verwendung der normierten Bodensignatur (610) zu erzeugen.

12. Vorrichtung (100, 200) gemäß einem der Ansprüche 9 bis 11, wobei das Referenzbild (110b, 340, 340`) ein Mittelwertbild (340, 340`) aus einer Vielzahl von störungsfreien GPR Bildern der Sequenz (210a, 310) der Mehrzahl der aufgenommenen GPR Bilder ist.

13. Vorrichtung (100, 200) gemäß einem der vorigen Ansprüche, wobei der Störobjektextraktor (110) einen Quotientenbildbestimmer (230) zur Bestimmung des Quotientenbildes (230a, 360, 360') aufweist und wobei der Störobjektextraktor (110) ausgebildet ist, um zur Extraktion des Störobjekts (110c, 620) eine Änderungsdetektion, basierend auf einer Filterung (390) und/oder einem Schwellwertvergleich (370), durchzuführen.

14. Verfahren (300, 800) zur Erzeugung von Trainingsdaten für zweidimensionale Scans eines Bodenradar-Systems, wobei das Verfahren die folgenden Merkmale aufweist:
Bestimmen (810) eines Quotientenbildes (230a, 360, 360`) aus einem Quell-GRP Bild (110a, 330, 330') mit einem Referenzbild (110b, 340, 340'); und
Extrahieren (820) zumindest eines Störobjekts (110c, 620) aus dem Quell-GPR Bild (110a, 330, 330'), basierend auf dem Quotientenbild (230a, 360, 360'); und
Erzeugen (830) zumindest eines Ergebnis-GPR Bildes (120a, 470) für das Quell-GPR Bild (110a, 330, 330'), abhängig von dem zumindest einen extrahierten Störobjekt (110c, 620), zur Erzeugung der Trainingsdaten.

15. Computerprogramm mit einem Programmcode zur Durchführung des Verfahrens (300, 800) nach Anspruch 14.

## Claims

1. Apparatus (100, 200) for generating training data for two-dimensional scans of a ground radar system,
wherein the apparatus (100, 200) comprises an interference object extractor (110) that is configured to determine a quotient image (230a, 360, 360') with a reference image (110b, 340, 340') from a source GPR image (110a, 330, 330') and to extract at least one interference object (110c, 620) on the basis of the quotient image (230a); and
wherein the apparatus (100, 200) comprises a result image generator (120) that is configured to generate at least one result GPR image (120a, 470) for the source GPR image (110a, 330, 330') on the basis of the at least one extracted interference object (110c, 620) in order to generate the training data.

2. Apparatus (100, 200) according to Claim 1, wherein the result image generator (120) is configured to insert the at least one interference object (110c, 620) into a second GPR image (120b) in order to generate the at least one result GPR image (120a, 470).

3. Apparatus (100, 200) according to Claim 2, wherein the second GPR image (120b) is the reference image (110b, 340, 340').

4. Apparatus (100, 200) according to any one of Claims 2 to 3, wherein the result image generator (120) is configured to change the at least one interference object (110c, 620) and/or a position of the at least one interference object (110c, 620) in the second GPR image (210b) in comparison with the source GPR image (110a, 330, 330') in order to generate the at least one result GPR image (120a, 470).

5. Apparatus (100, 200) according to any one of Claims 2 to 4, wherein the result image generator (120) is configured to change a scaling of the at least one interference object (110c, 620) in the second GPR image (120b) in comparison with the source GPR image (110a, 330, 330') in order to generate the at least one result GPR image (120a, 470).

6. Apparatus (100, 200) according to any one of Claims 2 to 5, wherein the result image generator (120) is configured to change a grayscale intensity of the at least one interference object (110c, 620) in the second GPR image (120b) in comparison with the source GPR image (110a, 330, 330') in order to generate the at least one result GPR image (120a, 470).

7. Apparatus (100, 200) according to any one of the preceding claims, wherein the source GPR image (110a, 330, 330') is a two-dimensional GPR image.

8. Apparatus (100, 200) according to any one of the preceding claims, wherein the source GPR image (110a, 330, 330') is a GPR image of a plurality of first GPR images.

9. Apparatus (100, 200) according to Claim 8, wherein the plurality of first GPR images is a plurality of temporally successive GPR images that were generated from a sequence (210a, 310) of a plurality of captured GPR images.

10. Apparatus (100, 200) according to Claim 9, wherein the apparatus (100, 200) is configured to compensate for a distance between sensor and ground surface that varies in the sequence (210a, 310) of the plurality of captured GPR images in order to generate the plurality of first GPR images.

11. Apparatus (100, 200) according to any one of Claims 9 to 10, wherein the apparatus (100, 200) is configured to normalize a ground signature that varies in the sequence (210a, 310) of the plurality of captured GPR images in order to obtain a normalized ground signature (610), and to generate the plurality of first GPR images using the normalized ground signature (610).

12. Apparatus (100, 200) according to any one of Claims 9 to 11, wherein the reference image (110b, 340, 340') is a mean value image (340, 340') from a plurality of interference-free GPR images of the sequence (210a, 310) of the plurality of captured GPR images.

13. Apparatus (100, 200) according to any one of the preceding claims, wherein the interference object extractor (110) comprises a quotient image determiner (230) for determining the quotient image (230a, 360, 360'), and wherein the interference object extractor (110) is configured to perform a change detection on the basis of a filtering (390) and/or a threshold value comparison (370) in order to extract the interference object (110c, 620).

14. Method (300, 800) for generating training data for two-dimensional scans of a ground radar system, the method comprising:
determining (810) a quotient image (230a, 360, 360') from a source GPR image (110a, 330, 330') with a reference image (110b, 340, 340'); and
extracting (820) at least one interference object (110c, 620) from the source GPR image (110a, 330, 330') on the basis of the quotient image (230a, 360, 360'); and
generating (830) at least one result GPR image (120a, 470) for the source GPR image (110a, 330, 330') depending on the at least one extracted interference object (110c, 620) in order to generate the training data.

15. Computer program having a program code for preforming the method (300, 800) according to Claim 14.

## Revendications

1. Dispositif (100, 200) pour générer des données d'entraînement pour des balayages bidimensionnels d'un système de radar terrestre,
dans lequel le dispositif (100, 200) présente un extracteur d'objet obstacle (110) qui est conçu pour déterminer, à partir d'une image de GPR de source (110a, 330, 330'), une image de quotient (230a, 360, 360') à l'aide d'une image de référence (110b, 340, 340') et pour extraire au moins un objet obstacle (110c, 620) sur base de l'image de quotient (230a); et
dans lequel le dispositif (100, 200) présente un générateur d'image de résultat (120) qui est conçu pour générer, pour l'image de GPR de source (110a, 330, 330'), au moins une image de GPR de résultat (120a, 470) sur base d'au moins un objet obstacle extrait (110c, 620), pour générer les données d'entraînement.

2. Dispositif (100, 200) selon la revendication 1, dans lequel le générateur d'image de résultat (120) est conçu pour insérer, pour générer l'au moins une image de GPR de résultat (120a, 470), l'au moins un objet obstacle (110c, 620) dans une deuxième image de GPR (120b).

3. Dispositif (100, 200) selon la revendication 2, dans lequel la deuxième image de GPR (120b) est l'image de référence (110b, 340, 340').

4. Dispositif (100, 200) selon l'une des revendications 2 à 3, dans lequel le générateur d'image de résultat (120) est conçu pour modifier l'au moins un objet obstacle (110c, 620) et/ou une position de l'au moins un objet obstacle (110c, 620) dans la deuxième image de GPR (210b), en comparaison avec l'image de GPR de source (110a, 330, 330'), pour générer l'au moins une image de GPR de résultat (120a, 470).

5. Dispositif (100, 200) selon l'une des revendications 2 à 4, dans lequel le générateur d'image de résultat (120) est conçu pour modifier une mise à échelle de l'au moins un objet obstacle (110c, 620) dans la deuxième image de GPR (120b) en comparaison avec l'image de GPR de source (110a, 330, 330'), pour générer l'au moins une image de GPR de résultat (120a, 470).

6. Dispositif (100, 200) selon l'une des revendications 2 à 5, dans lequel le générateur d'image de résultat (120) est conçu pour modifier une intensité de valeur de gris de l'au moins un objet obstacle (110c, 620) dans la deuxième image de GPR (120b) en comparaison avec l'image de GPR de source (110a, 330, 330'), pour générer l'au moins une image de GPR de résultat (120a, 470).

7. Dispositif (100, 200) selon l'une des revendications précédentes, dans lequel l'image de GPR de source (110a, 330, 330') est une image de GPR bidimensionnelle.

8. Dispositif (100, 200) selon l'une des revendications précédentes, dans lequel l'image de GPR de source (110a, 330, 330') est une image de GPR parmi une pluralité de premières images de GPR.

9. Dispositif (100, 200) selon la revendication 8, dans lequel il s'agit, pour la majorité des premières images de GPR, d'une pluralité d'images de GPR successives dans le temps qui ont été générées à partir d'une séquence (210a, 310) d'une pluralité d'images de GPR capturées.

10. Dispositif (100, 200) selon la revendication 9, dans lequel le dispositif (100, 200) est conçu pour compenser une distance entre le capteur et la surface terrestre qui varie dans la séquence (210a, 310) de la pluralité d'images de GPR capturées, pour générer la majorité des premières images de GPR.

11. Dispositif (100, 200) selon l'une des revendications 9 à 10, dans lequel le dispositif (100, 200) est conçu pour normaliser une signature terrestre qui varie dans la séquence (210a, 310) de la pluralité d'images de GPR capturées, pour obtenir une signature terrestre normalisée (610) et pour générer la pluralité des premières images de GPR à l'aide de la signature terrestre normalisée (610).

12. Dispositif (100, 200) selon l'une des revendications 9 à 11, dans lequel l'image de référence (110b, 340, 340') est une image de valeur moyenne (340, 340') parmi une pluralité d'images de GPR sans obstacle de la séquence (210a, 310) de la pluralité des images de GPR capturées.

13. Dispositif (100, 200) selon l'une des revendications précédentes, dans lequel l'extracteur d'objet obstacle (110) présente un déterminateur d'image de quotient (230) destiné à déterminer l'image de quotient (230a, 360, 360') et dans lequel l'extracteur d'objet obstacle (110) est conçu pour effectuer, pour extraire l'objet obstacle (110c, 620), une détection de modification sur base d'un filtrage (110c, 620) et/ou d'une comparaison de valeur seuil (370).

14. Procédé (300, 800) de génération de données d'entraînement pour des balayages bidimensionnels d'un système de radar terrestre, dans lequel le procédé présente les caractéristiques suivantes consistant à:
déterminer (810) une image de quotient (230a, 360, 360') à partir d'une image de GRP de source (110a, 330, 330') par une image de référence (110b, 340, 340'); et
extraire (820) au moins un objet obstacle (110c, 620) de l'image de GPR de source (110a, 330, 330') sur base de l'image de quotient (230a, 360, 360'); et
générer (830) au moins une image de GPR de résultat (120a, 470) pour l'image de GPR de source (110a, 330, 330') en fonction de l'au moins un objet obstacle (110c, 620) extrait, pour générer les données d'entraînement.

15. Programme d'ordinateur avec un code de programme pour mettre en oeuvre le procédé (300, 800) selon la revendication 14.
